# EUROPÄISCHE PATENTANMELDUNG

(11) **EP 1 538 310 A1**
(43) Veröffentlichungstag der Anmeldung: **08.06.2005**
(21) Anmeldenummer: 04028648.6
(22) Anmeldetag: 03.12.2004
(51) Int. Cl.: F01N 3/022, F01N 3/08, B01D 46/52

(54) **Partikelfilter**

(30) Priorität: 03.12.2003 DE 10356997
(71) Anmelder: Swars, Helmut, 51429 Bergisch Gladbach (DE)
(72) Erfinder: Swars, Helmut, 51429 Bergisch Gladbach (DE)
(74) Vertreter: Gudat, Axel, Dr.

(57) **Zusammenfassung**

Die Erfindung betrifft einen Partikelfilter (8), insbesondere für Abgase von Dieselbrennkraftmaschinen, mit einer Vielzahl von zu durchströmenden Filterwänden (2) zur Abtrennung von Partikeln, wobei der Filter (8) eine Einströmseite (3,26) und eine Ausströmseite (4,27) aufweist und in einer Durchströmungsrichtung durchströmbar ist, wobei die Filterwände (2) aus einem durch Deformation strukturierbaren Flächengebilde bestehen und an der Einströmseite (3,26) und Ausströmseite (4,27) des Filters zumindest im wesentlichen partikeldicht miteinander verbunden sind. Um den Partikelfilter (8) weiterzubilden wird vorgeschlagen, die Vielzahl von Filterwänden (2) des Filters (8) oder eines eine Vielzahl von Filterwänden (2) aufweisenden Filtersegmentes (9a,9b) durch ein durchgehendes Band (7) aus Filtermaterial auszubilden, das unter Ausbildung von Umlenkbereichen zu einem dreidimensionalen Körper abgelegt ist. An der Einströmseite (3,26) oder der Ausströmseite (4,27) des Filters können benachbarte Filterwände (2) durch einen durchgehenden Umlenkbereich des bandförmigen Filtermaterials verbunden sein.

## Beschreibung

Die Erfindung betrifft einen Partikelfilter, insbesondere für Abgase von Dieselbrennkraftmaschinen, mit einer Vielzahl von zu durchströmenden Filterwänden mit Filterflächen aus einem Filtermaterial, die für ein Fluid permeabel und für von diesem mitgeführte Partikel im Wesentlichen unpermeabel sind, wobei der Filter eine Einströmseite und eine Ausströmseite aufweist und der Filter in einer Durchströmungsrichtung durchströmbar ist, wobei die Filterwände aus einem durch Deformation strukturierbaren Flächengebilde bestehen und an der Einströmseite und Ausströmseite des Filters zumindest im wesentlichen partikeldicht miteinander verbunden sind.

Derartige Partikelfilter, die insbesondere zur Reinigung von Abgasen von Dieselbrennkraftmaschinen in Form von Rußfiltern Verwendung finden, werden zumeist eingesetzt, um fluide gasförmige Medien von mitgeführten Partikeln zu reinigen. Gattungsgemäße Partikelfilter sind daher auch in anderen Bereichen der Gasreinigung einsetzbar, wie beispielsweise der Reinigung anderer Verbrennungsgase oder Abgase aus technologischen Prozessen. Gegebenenfalls können die fluiden Medien aber auch flüssige Medien darstellen.

Es sind Partikelfilter mit keramischen Filterelementen bekannt, die jedoch generell den Nachteil geringer Temperaturwechselbeständigkeit sowie andere mit der Verwendung keramischer Materialien bestehenden Nachteile wie Sprödigkeit und andere Nachteile der Handhabung aufweisen.

Ferner sind Partikelfilter bestehend aus aufeinander gestapelten Filterplatten bekannt, wobei die Filterplatten strukturgebende, deformierbare Gebilde wie Metallgitter aufweisen können, die mit geeignetem Filtermaterial beschichtet sind, um die Filtereigenschaften, insbesondere hinsichtlich der Durchlässigkeit bzw. Undurchlässigkeit von Partikeln bestimmter Größe oder Form definieren zu können. Es versteht sich, dass die Erfindung jedoch nicht auf Partikelfilter mit derartig aufgebauten Filterplatten beschränkt ist, sofern das die Filterwände bildende Filtermaterial unter Erhalt einer für den Anwendungsfall noch ausreichenden Strukturfestigkeit durch Deformation, insbesondere durch mechanische Deformation, zumeist durch Aufeinanderstapeln einer Vielzahl von ausreichend strukturierbar ist.

Bei derartigen Partikelfiltern mit einer Vielzahl gestapelter Filterplatten sind benachbarte Filterplatten an ihren Begrenzungskanten oder Anlagebereichen miteinander zu verbinden, beispielsweise durch Ausbildung von Schweißverbindungen. Die Herstellung derartiger Schweißverbindungen ist nicht nur aufwändig und zeitintensiv, sie führt auch zu erhöhten Bindefehlern und Ausschuss. Ferner ist aufgrund der Erfordernisse der Temperaturwechselbeständigkeit des Partikelfilters, beispielsweise bei Einsatz als Rußfilter bei Diesel-Kraftfahrzeugen, über längere Zeiträume ein Trennen der Schweißnähte der vergleichsweise dünnen Filterplatten zu befürchten, was zu Leckagen und damit zu einer Fehlfunktion des Partikelfilters führen kann. Ferner ist die Herstellung einer Vielzahl einzelner Filterwände, die zu einem Partikelfilter zusammengefügt werden müssen, vergleichsweise aufwändig und kostenintensiv.

Der Erfindung liegt daher die Aufgabe zugrunde, einen Partikelfilter zu schaffen, der einfach und kostengünstig herstellbar ist und der eine hohe Dichtigkeit und damit zuverlässige Filterwirkung bezogen auf die zu separierenden Partikel aufweist.

Die Aufgabe wird durch einen Partikelfilter gelöst, bei dem erfindungsgemäß die Vielzahl von Filterwänden des Filters oder eines eine Vielzahl von Filterwänden aufweisenden Filtersegmentes durch ein durchgehendes Band aus Filtermaterial gebildet werden, das unter Ausbildung von Umlenkbereichen zu einem dreidimensionalen Körper abgelegt ist, wobei einströmseitig offene Fluidkanäle vorgesehen sind, die sich zumindest über eine Teillänge des Filterkörpers über zumindest ein Viertel der Breite oder den gesamten Radius desselben spaltförmig erstrecken. Vorzugsweise erstrecken sich die Fluidkanäle über zumindest die Hälfte oder im Wesentlichen über die gesamte Filterkörperbreite spaltförmig. Vorzugsweise sind sämtliche der einströmseitigen und gegebenenfalls auch ausströmseitigen Fluidkanäle für das zu reinigende Fluiod derart ausgebildet. Dadurch, dass eine Vielzahl von Filterwänden durch ein zusammenhängendes, durchgehendes Band durch geeignete Ablage bzw. Faltung des Bandes bereitgestellt werden kann, ist der Partikelfilter oder ein eine Vielzahl von Filterwänden aufweisendes Filtersegment, nicht nur einfach herstellbar, es wird auch auf die Erzeugung einer Vielzahl von Fügestellen, wie sie zur Verbindung herkömmlicher Filterplatten unter Erzeugung eines Filterkörpers notwendig ist, verzichtet. Fügestellen zwischen einzelnen Filterwänden werden bei dem erfindungsgemäßen Partikelfilter durch die Umlenkbereiche des einteiligen Bandes aus Filtermaterial bereitgestellt, so dass hier die Fügestellen an den einzelnen Stossbereichen benachbarter Filterwände eine wesentlich geringere Ausdehnung aufweisen können oder auf diese weitestgehend zumindest an den Umlenkbereichen oder generell verzichtet werden kann. Ferner ist praktisch eine kontinuierliche Fertigung des Filters aus einem bandförmigen Filtermaterial möglich, wodurch sich die Herstellung wesentlich vereinfacht. Der Filter kann hierbei aus 2 bis 5 Filtersegmenten zusammengefügt sein, ohne hierauf beschränkt zu sein, vorzugsweise besteht der Filter aus nur einem zusammenhängenden Segment.

Die Spalte können sich mit vorzugsweise im Wesentlichen konstanter Spalthöhe über zumindest im Wesentlichen die gesamte Filterlänge in Durchströmungsrichtung des Fluids erstrecken.

Vorzugsweise sind sowohl an Einström- und Ausströmseite des Filters die Verbindungen benachbarter Filterwände durch Umlenkbereiche des durchgehenden Bandes aus Filtermaterial bereitgestellt, so dass auf separate Fügevorgänge insbesondere an den Umlenkbereichen oder an dem Filter insgesamt weitestgehend oder vollständig verzichtet werden kann. Besondere Vorteile ergeben sich jedoch bereits, wenn nur auf einen Teil der Fügestellen benachbarter Filterwände verzichtet werden kann, wodurch sich die Herstellung bereits vereinfacht und die Zuverlässigkeit des Partikelfilters über eine lange Lebensdauer wesentlich verbessert werden kann. Da der Partikelfilter in den Übergangsbereichen benachbarter Filterwände durch Umlenkbereiche des durchgehenden, vorzugsweise einteiligen, Bandes, welches ebenfalls die Filterwände ausbildet, durchgehend und vorzugsweise ohne Einschnitte oder Aussparungen ausgebildet ist, kann eine hohe Mediendichtigkeit des Partikelfilters erzielt werden. Die Umlenkbereiche können mehr oder weniger kantig oder bogenförmig ausgebildet sein, beispielsweise auch in Form von Faltungen des durchgehenden, vorzugsweise einteiligen, Bandes aus Filtermaterial.

Verbindungsbereiche von Bandbereichen können so angeordnet werden, dass der Fluiddruck nicht unmittelbar die Fügestellen belastet, beispielsweise durch Ausbildung der Verbindungsstellen als Falze.

Vorzugsweise stellen die Umlenkbereiche des abgelegten Bandes Anströmbereiche für das zu reinigende fluide Medium dar und können eine Strömungsumlenkung desselben bewirken und/oder eine Filterwirkung haben.

Gegebenenfalls kann auch lediglich ein einströmseitiger und/oder ausströmseitiger Bereich des Filters aus einem entsprechend strukturiert abgelegten bzw. gefalteten Band ausgebildet werden, so dass Fügebereiche der Filterwände an den Filterstirnseiten vermieden werden, was bereits eine gewisse Verbesserung mit sich bringt.

Das durchgehende Band kann gegebenenfalls zwei oder mehr Bandabschnitte aufweisen, die entlang einer vorzugsweise im wesentlichen parallel zur Bandlängsrichtung verlaufenden Fügelinie miteinander im wesentlichen partikeldicht oder vorzugsweise zugkraftaufnehmend verbunden sind, beispielsweise durch eine Schweiß- oder Falzverbindung. Die Fügelinie kann die Länge des Bandes haben, gegebenenfalls kann diese bei Verlauf schräg zur Bandlängsrichtung, beispielsweise einem Winkel von < 45° oder < 60° oder 75°, auch kürzer sein, so dass mehrere Fügelinien in Bandlängsrichtung beabstandet zueinander aufeinander folgen. Da die Fügelinie im wesentlichen in Bandlängsrichtung verläuft, werden Fügestellen, die sich an den Umlenkbereichen des Bandes über eine größeren Bereich der Filterstirnseite erstrecken, vermieden.

Vorzugsweise ist das durchgehende Band jeweils zumindest über die Breite einteilig ausgeführt, durch die bei abgelegtem Band der von dem fluiden Medium durchströmte Filterbereich des Filters gebildet wird, oder über die gesamte Breite des Bandes. Vorzugsweise ist das Band auch über dessen gesamte Länge einteilig ausgeführt. Gegebenenfalls können Fügestellen in etwa auf Höhe der Seitenwände des Filters oder in dem Bereich des Bandes, der seitlich des Durchströmbereichs des Filters angeordnet ist angeordnet sein, beispielsweise unter Ausbildung einer Filterseitenwand durch Abbiegung von der Filterwand. Die seitlichen Bereiche des Bandes können somit andere Eigenschaften aufweisen, beispielsweise um eine einfachere oder stabilere Befestigung an einem Gehäuse zu ermöglichen.

Vorzugsweise werden sämtliche Filterwände des Partikelfilters durch ein einzelnes durchgehendes, vorzugsweise einteiliges, Band aus Filtermaterial ausgebildet. Gegebenenfalls kann der Partikelfilter aber auch aus mehreren Filtersegmenten bestehen, die jeweils eine Vielzahl von Filterwänden aufweisen, wobei jeweils ein Segment des Partikelfilters durch ein einteiliges Band, welches in geeigneter Weise zu einem Filterkörper geformt bzw. abgelegt ist, ausgebildet wird. Die Segmente können überund/oder nebeneinander angeordnet sein, um den Filter zu bilden. Die Segmente können durch Gehäuseteile oder dergleichen getrennt sein, sie können auch zu einem zusammenhängenden Filterkörper verbunden sein, beispielsweise durch Fügen der jeweiligen Endbereiche der Filtermaterialbänder verschiedener Segmente miteinander.

Vorzugsweise wird der Partikelfilter durch ein durchgehendes, insbesondere einteiliges, Band aus Filtermaterial gebildet, welches unter Ausbildung eines dreidimensionalen Körpers mäanderförmig abgelegt wird. Durch die mäanderförmige Ablage werden Fügestellen zwischen benachbarten Filterflächen weitestgehend vermieden. Derartige dreidimensionale Körper aus mäanderförmig abgelegtem bandförmigen Filtermaterial können einzelne Segmente eines Partikelfilters oder den gesamten Filterkörper des Partikelfilters erzeugen.

Alternativ kann ein Partikelfilter mit einer Vielzahl von Filterwänden aus einem durchgehenden, insbesondere einteiligen, Band aus Filtermaterial beispielsweise auch dadurch hergestellt werden, dass das Band entlang einer in Bandlängsrichtung verlaufenden Faltungslinie unter Lagendoppelung gefaltet ist, wobei die Faltungslinie vorzugsweise die Mittellinie des Bandes darstellt, wobei die beiden Bandhälften an den gegenüberliegenden Pfeillängskanten einen gewissen Abstand voneinander aufweisen und wobei anschließend das etwas gespreizte Band um eine zentrale Achse schrauben- oder schneckenförmig gewickelt wird. Die zentrale Achse kann durch ein Bauteil wie beispielsweise einen Längsstab bereitgestellt werden oder eine virtuelle Achse darstellen. Die Krümmung des Bandes in Wickelrichtung kann beispielsweise dadurch ermöglicht werden, dass bestimmte Bereiche des Bandes zusammengefaltet oder gerafft werden, wobei die Faltungslinien im Wesentlichen senkrecht zu der Längsachse des Bandes verlaufen. Derartige Partikelfilter sind für bestimmte Anwendungen herstellbar, wenn auch gegenüber Partikelfiltern mit mäanderförmig abgelegtem Filterband in der Herstellung aufwändiger.

Vorteilhafterweise wird die Gesamtheit der Filterwände des Filters durch ein in geeigneter Weise abgelegtes einteiliges Band aus Filtermaterial gebildet. Dies kann sich auf den gesamten Filterkörper oder auf den filterwirksamen Bereich desselben beziehen, wenn Seitenstreifen zur Ausbildung seitlicher Filter wände aus anderem Material vorgesehen sind. Gegebenenfalls kann derart auch nur ein Filtersegment aufgebaut werden, wobei der Partikelfilter aus mehreren miteinander verbundenen Segmenten bestehen kann, die in Durchströmungsrichtung benachbart zueinander oder hintereinander angeordnet sein können.

Besonders bevorzugt erstrecken sich die Umlenkbereiche des einteiligen Bandes aus Filtermaterial durchgehend über zumindest die gesamte Ausdehnung des Filters in Durchströmungsrichtung oder einer Richtung quer zu dieser. Einschnitte des Filtermaterialbandes, insbesondere linienförmige Einschnitte, die weitere Fügeschritte wie Schweißverbindungen erforderlich machen würden, können so praktisch vollständig vermieden werden. Die Umlenkbereiche erstrecken sich mit ihrer Längsausdehnung jeweils vorzugsweise quer, insbesondere senkrecht, zur Bandlängsrichtung, ist das Band entlang einer parallel zur Bandlängsachse verlaufenden Faltungslinie gefaltet, so können sich die Umlenkbereiche in Bandlängsrichtung erstrecken. Benachbarte Filterwände werden so durch die einteilig angeformten Umlenkbereiche durchgehend miteinander verbunden.

Nach einer besonders bevorzugten Ausführungsform ist das mäanderförmig abgelegte Filtermaterialband derart abgelegt, dass dessen Längsrichtung im Wesentlichen oder exakt parallel zur Durchströmungsrichtung des fluiden Mediums verläuft. Hierdurch kann ein Partikelfilter erzeugt werden, bei welchem sämtliche Filterwände des Partikelfilters oder gegebenenfalls eines Segmentes desselben durch Umlenkbereiche des Filtermaterialbandes miteinander verbunden werden, die sich vorzugsweise quer oder im Wesentlichen senkrecht zur Durchströmungsrichtung des fluiden Mediums erstrecken, wobei sämtliche Übergangsbereiche zwischen benachbarten Filterwänden durch einstückig mit diesen verbundene Umlenkbereiche ausgebildet werden. Auf zusätzliche Fügemaßnahmen, insbesondere entlang von stirnseitigen Fügelinien, zur Verbindung der Filterwände kann hierdurch vollständig verzichtet werden. Gleichzeitig können die Umlenkbereiche auf einfache Weise mit geeigneten Profilierungen versehen werden, um die Ein- und/oder Ausströmbereiche des Filters zu stabilisieren und/oder um günstige Strömungsverhältnisse zu schaffen.

Alternativ kann beispielsweise der Partikelfilter durch ein zusammenhängendes, vorzugsweise einteiliges Filtermaterialband auch dadurch hergestellt werden, dass das Band entlang zumindest einer im Wesentlichen parallel zur Bandlängsrichtung verlaufenden Faltungslinie zumindest unter Lagendoppelung gefaltet wird und anschließend derart mäanderförmig abgelegt wird, dass die Längsrichtung des Bandes quer, vorzugsweise senkrecht zur Durchströmungsrichtung des fluiden Mediums verläuft. Die in Bandlängsrichtung verlaufende Faltungslinie kann dann einströmseitig oder ausströmseitig angeordnet sein. Durch die Faltung entlang der Faltungslinie in Bandlängsrichtung werden somit zwei Sätze von Filterwänden von zunächst im wesentlichen gleicher Länge in Durchströmungsrichtung erzeugt. Gegebenenfalls kann das Filtermaterialband auch mehrlagig entlang einer in Längsrichtung verlaufenden Faltungslinie gefaltet werden, beispielsweise durch drei Faltungen, so dass ein Band mit vier Sätzen von Filterwänden, entsprechend vier Streifen des bandförmigen Materials erzeugt werden. Nach mäanderförmiger Ablage des Bandes können benachbarte Längskanten des Bandes, die unterschiedlichen Lagendoppelungen bezogen auf die Faltungslinie des Bandes zuzuordnen sind, miteinander verbunden werden, vorzugsweise durch Umfaltung von randseitigen Bandbereichen um die Kante einer benachbarten Filterwand. Bei geeignetem Filtermaterialband kann bereits durch die Umfaltung eines randseitigen Bereiches eine ausreichend stabile Verbindung mit einem Randabschnitt einer benachbarten Filterwand erzeugt werden, wobei vorzugsweise die Abfaltung derart erfolgt, dass bereits eine ausreichend partikeldichte Verbindung der Randbereiche benachbarter Filterwände erzeugt werden, so dass auf zusätzliche Fügeverfahren wie die Erzeugung von Schweißverbindungen vollständig verzichtet werden kann, auch wenn gegebenenfalls derartige weitere Fügeverfahren wie Schweißverbindungen alternativ oder zusätzlich vorgesehen sein können.

Vorteilhafterweise ist die in Bandlängsrichtung verlaufende Faltungslinie parallel zur Bandlängsachse ausgerichtet, so dass die randseitigen Kanten benachbarter Filterwände dann parallel zueinander angeordnet sind.

Ist die parallel zur Bandlängsrichtung verlaufende Faltungslinie außermittig angeordnet, so dass benachbarte Filterwände unterschiedlicher Erstreckung ausgehend von der Faltungslinie vorliegen, so kann der überstehende randseitige Bereich einer Filterwand um die Kante einer Filterwand einer benachbarten Lagendoppelung umgefaltet werden, so dass im Verbindungsbereich vorzugsweise lediglich eine Dreifachlage des Filtermaterialbandes erzeugt wird.

Vorzugsweise ist die Breite des Filtermaterialbandes derart bemessen, dass diese die Breite des durch die geeignete dreidimensionale Ablage des Bandes erzeugten Filters bzw. Filtersegmentes zumindest über eine Teillänge oder vorzugsweise die gesamte Länge des Bandes übersteigt, wobei randseitige Bereiche des Bandes an zumindest einem oder beiden seitlichen Bandrändern gegenüber der Erstreckungsrichtung der durch einen Bandabschnitt gebildeten Filterrand gegenüber dieser abgebogen sind.

Die randseitigen Bereiche sind somit in Richtung auf eine Seitenwand des Filters bzw. Filtersegmentes, die sich zwischen der Einström- und Ausströmseite des Filters befindet, abgebogen. Durch diese Abbiegungen können Verbindungen zwischen verschiedenen Filterwänden erzeugt werden, wobei die Verbindungen durch kraft- und/oder formschlüssige und/oder stoffschlüssige Mittel wie beispielsweise durch Falzbildung oder auch durch Schweißverbindungen erzeugt werden können. Die Verbindungen können jeweils zwischen benachbarten Filterwänden oder auch zusätzlich oder alternativ zwischen weiter benachbarten Filterwänden erfolgen, so dass sich die abgebogenen Bereich auch über drei, vier oder mehr Lagen der benachbarten Filterwände erstrecken können. Durch derartige Verbindungen kann die Formstabilität des Partikelfilters deutlich erhöht werden. Ferner können derartige abgebogene Bereiche zum Aufbau einer oder beider Seitenwände des Filters dienen, wobei sich die abgebogenen Bereiche über einen Teil, vorzugsweise den mittleren Teil des Filters oder Filtersegmentes, vorzugsweise über die gesamte Erstreckung des Filters bzw. Filtersegmentes in Durchströmungsrichtung erstrecken. Durch derartige Abbiegungen können insbesondere auch an den Randbereichen der Filterwände Leckagen vermieden werden. Zugleich können derartige abgebogene Bereiche dazu dienen, weiter unten beschriebene Versteifungselemente oder katalytisch aktive Elemente an dem Partikelfilter festzulegen, beispielsweise durch Einklemmung von Endbereichen der genannten Elemente zwischen benachbarten abgebogenen Bereichen des Filtermaterialbandes. Die abgebogenen Bereiche können insbesondere unter Lagendoppelung abgebogen sein. Die abgebogenen Bereiche sind vorzugsweise flach an die entsprechende Seitenwand des Partikelfilters angelegt, gegebenenfalls können die abgebogenen Bereiche untereinander auch durch Falzverbindungen unter Umfalzung randseitiger Bereiche des Filtermaterialbandes verbunden sein. Vorzugsweise erfolgt die Verbindung der abgebogenen Bereiche des Filtermaterialbandes zumindest im Wesentlichen oder vollständig partikeldicht.

Im Sinne dieser Anmeldung ist der Begriff "partikeldicht" dahingehend zu verstehen, dass durch die Filterwände jeweils die bestimmungsgemäß zu entfernenden Partikel mit einer Größe über einem Schwellwert zurückgehalten werden.

An den Bereichen des Partikelfilters, an denen Lagendoppelungen des Filtermaterialbandes entstehen, können Ausklinkungen einer Lage des Bandes unter Erhalt einer durchgehenden Filterwand vorgesehen sein, wobei die Ausklinkungen in Richtung auf eine benachbarte Filterwand aus der Lage des Bandes abgebogen sind und somit von der ausgeklinkten Filterwand vorstehen. Derartige Ausklinkungen können dazu dienen, eine Filterwand an einer gegenüberliegenden Filterwand zu befestigen, beispielsweise durch Einklemmen des ausgeklinkten Bereiches in einem Falz der gegenüberliegenden Filterwand. Derartige Ausklinkungen können alternativ oder zusätzlich auch dazu dienen, andere Elemente des Partikelfilters festzulegen, wie beispielsweise weiter unten beschriebene Versteifungselemente, katalytisch aktive Elemente oder dergleichen. Die Lagendoppelungen auf Höhe der ausgeklinkten Bereiche sind vorzugsweise derart ausgeführt, dass durch die benachbarte Lage des Filtermaterialbandes die durch die Ausklinkung erzeugte Ausnehmung mehr oder weniger vollständig, vorzugsweise partikeldicht, abgeschlossen wird. Die gedoppelten Lagen des Filtermaterialbandes liegen somit im Bereich der Ausklinkungen oder zumindest in einem benachbarten, die Ausklinkung umfänglich umgebenden Bereich eng an der mit der Ausklinkung versehenen Lage des Bandmaterials an.

In entsprechender Weise können zusätzlich oder alternativ Ausklinkungen an Lagendoppelungen vorgesehen sein, die zumindest teilweise oder vollständig eine Seitenwand des Partikelfilters bilden oder zwei oder mehrere Filterwände miteinander verbinden. Derartige Ausklinkungen können insbesondere dazu vorgesehen sein, den Partikelfilter in einem den Filter aufnehmenden Gehäuse festzulegen. Zur Festlegung des Partikelfilters an dem Gehäuse können die Ausklinkungen an dem Gehäuse form- oder kraftschlüssig festgelegt sein, beispielsweise durch Einklemmen an bestimmten Bereichen des Gehäuses, die beispielsweise in Form von Taschen oder Ausbuchtungen ausgeführt sein können. Gegebenenfalls können zusätzlich oder alternativ die Ausklinkungen an dem Gehäuse auch stoffschlüssig, beispielsweise durch Schweißverbindungen, festgelegt sein.

Vorzugsweise ist das durchgehende Band aus Filtermaterial zumindest auf den filterwirksamen Bereich des Bandes einteilig ausgebildet. Gegebenenfalls können auch ein- oder beidseitig an dem Band aus Filtermaterial, das insoweit vorzugsweise einteilig ausgebildet ist, über eine Teillänge des Bandes oder durchgehend über die gesamte Länge des Bandes Streifen aus Blechmaterial angeformt sein. Das Blechmaterial ist für das Fluid im Wesentlichen oder vollständig undurchlässig, es versteht sich, dass gegebenenfalls auch ein anderes geeignetes Material einsetzbar ist. Die Verbindung des Filtermaterialbandes mit den seitlichen Blechstreifen kann durch eine Stopfschlussverbindung, beispielsweise durch eine Schweißverbindung oder durch eine kraft- und/oder formschlüssige Verbindung wie beispielsweise eine Falzverbindung realisiert sein. Randbereiche des Bandes, durch die beispielsweise Seitenwände des Filters aufgebaut oder Blechlagen miteinander verbunden werden, müssen somit nicht mehr aus vergleichsweise teurem und schwerer handhabbarem Filtermaterial bestehen. Die Verbindungsbereiche zwischen Filtermaterial und seitlichen Randstreifen des Bandes sind in dem hergestellten Partikelfilter vorzugsweise außenseitig angrenzend an dem filterwirksamen Bereich des Filters angeordnet, beispielsweise auf Höhe des Übergangsbereichs der Filterwände in die Seitenwände oder die Übergangsbereiche sind innerhalb der Seitenwände integriert.

Vorzugsweise weist der Filter Spalte auf, die sich über zumindest eine Teillänge oder im Wesentlichen die gesamte Länge und zumindest im Wesentlichen die gesamte Breite des Filters erstrecken, wodurch dessen Regeneration z. B. durch Spülung mit Spülgasen in eine Richtung quer zur Strömungsrichtung des zu reinigenden Fluids besonders einfach möglich ist. Die Spalthöhe kann ≥ 10%, ≥ 25% oder 50%, vorzugsweise ≥ 75%, vorzugsweise ca. 100% des mittleren oder maximalen Abstandes benachbarter Filterwände betragen. Die Spalte können beispielsweise durch alternierende Ablage invers strukturierter Filterwände oder durch Einbuchtungen von Wellenrücken oder Rippen von Filterwänden erzeugt werden.

Vorzugsweise weisen einige oder sämtliche Filterwände eine Strukturierung in Form von sich im Wesentlichen in Durchströmungsrichtung erstreckenden Rippen auf, die sich über einen Teil, beispielsweise mindestens ein Viertel, mindestens die Hälfte oder vorzugsweise im Wesentlichen die gesamte Erstreckung des Filters in Durchströmungsrichtung erstrecken. Durch diese Strukturierungen kann sowohl die wirksame Filterfläche als auch die Stabilität der Filterwände erhöht werden. Vorzugsweise erfolgt die Strukturierung durch eine Prägung oder Deformation des Filterbandmaterials, insbesondere in Art einer Faltung oder wellenförmigen Strukturierung des Filtermaterialbandes. Hierzu kann das Band beispielsweise zickzackförmig gefaltet werden, wobei die entstehenden Rippen im Wesentlichen in Bandlängsrichtung verlaufen oder mit dieser einen geringen Winkel einschließen. Vorzugsweise erfolgt die Strukturierung des Bandes unter Ausbildung von Rippen derart, dass durch diese die Breite des Bandes gleichbleibend über dessen gesamte Länge vermindert wird.

Die Strukturierung benachbarter Filterwände kann derart erfolgen, dass die quer zur Durchströmungsrichtung aufeinanderfolgenden Filterwände, die in dieser Richtung vorzugsweise im Wesentlichen parallel aufeinanderliegend gestapelt sind, im Wesentlichen kongruent oder invers zueinander angeordnet sind. Gegebenenfalls können benachbarte Filterwände jedoch auch andersartig, d.h. nicht kongruent, strukturiert sein, wodurch die Strömungsverhältnisse beeinflussbar sind. Gegebenenfalls ist aber auch eine nichtkompatible Ausbildung benachbarter Filterwände möglich.

Sind benachbarte Filterwände unter Ausbildung von sich vorzugsweise alternierend ändernden Filterwandabständen strukturiert, wobei die Strukturierung regelmäßig oder unregelmäßig sein kann, so sind vorzugsweise die Umlenkbereiche des Bandmaterials in dem Bereich größerer Abstände der Filterwände voneinander unter Ausbildung von in das Filterinnere hin zurückspringenden Einbuchtungen ausgeführt. Hierdurch kann eine Umformung des Filtermaterialbandes ohne Stauchung oder Dehnung erfolgen, was insbesondere bei nicht-duktilem Filterwandmaterial vorteilhaft ist. Die Filterwände können bei dieser Anordnung insbesondere invers zueinander strukturiert sein.

Vorzugsweise sind benachbarte Filterwände unter Ausbildung von im Wesentlichen in Durchströmungsrichtung verlaufenden Rippen strukturiert, wobei die Rippen im Wesentlichen zickzackförmig gefaltet, in Form von Filterwandwellungen ausgebildet oder anders gestaltet sein, wobei benachbarte Filterwände mit einem Abstand in einer Stapelungsrichtung aufeinander folgend stapelförmig abgelegt sind, wobei unter Verringerung des Filterwandabstandes ausgebildete Abflachungen vorgesehen sind, die an dem Filter stirnseitig angeordnet und in Form von sich in das Filterinnere hineinerstreckenden Einbuchtungen ausgeführt sind. Diese Einbuchtungen sind vorzugsweise an Umlenkbereichen des Filtermaterialbandes ausgebildet, die benachbarte Filterwände durchgehend bzw. einstückig miteinander verbinden. Vorzugsweise sind derartige Einbuchtungen vorgesehen, wenn benachbarte Filterwände kongruent zueinander strukturiert sind.

Die Abflachungen können insbesondere derart ausgebildet sein, dass die benachbarten Filterwände nur geringfügig voneinander beabstandet sind, beispielsweise in bis zu fünffacher oder bis zu ein- bis zweifacher Filterwandstärke, vorzugsweise liegen benachbarte Filterwände im Bereich der Abflachungen flächig aneinander an.

Gegebenenfalls können die abgeflachten Bereiche der Filterwände in einem gewissen Winkel zu der Haupterstreckungsrichtung der zugeordneten Filterwände schräg angestellt sein, so dass sich bei schräger Anströmung des Filters vorteilhafte Strömungsverhältnisse ergeben.

Vorzugsweise haben die Abflachungen benachbarter Filterwände, die insbesondere im Umlenkbereich des Filterbandmaterials unter Ausbildung von Lagendoppelungen vorgesehen sein können, in Erstreckungsrichtung der Filterwände bzw. in Durchströmungsrichtung des Filters einen wellenförmigen oder zickzackförmigen Verlauf, so dass Abflachungsbereiche mit geringerer und tieferer Erstreckung ins Filterinnere vorliegen. Vorzugsweise entspricht die Begrenzungslinie der Abflachungen zum Filterinneren hin in ihrer Konturform der rippenförmigen Strukturierung der Filterwände im stirnseitigen Bereich der Abflachung. Im Falle von zickzackförmig strukturierten Filterwänden mit in Durchströmungsrichtung verlaufenden Rücken ist somit die Abflachung ebenfalls vorzugsweise zickzackförmig ausgebildet, entsprechendes gilt bei wellenförmiger Strukturierung der Filterwände, bei denen die Abflachungen sich vorzugsweise wellenförmig in das Filterinnere hinein erstrecken. Im Scheitelbereich der Filterwandrippen weisen die Abflachungen jeweils vorzugsweise eine tiefere Erstreckung in das Filterinnere auf, vorzugsweise eine maximale Erstreckung, wobei im Bereich von Strukturierungstälern beispielsweise Wellentälern oder Rippensenken die Abflachungen einen geringeren, vorzugsweise einen minimalen Abstand zu der Filterstirnseite aufweisen. Vorzugsweise entsprechen Abflachungen und Filterwandstrukturierungen einander im Wesentlichen dem Ausmaß nach, beispielsweise mit Toleranzen von weniger als 20%, vorzugsweise weniger als 10% oder besonders bevorzugt im Wesentlichen ohne Abweichungen. Die Abflachungen gehen hierbei vorzugsweise mehr oder weniger stufenförmig, besonders bevorzugt mit im Wesentlichen rechtwinkligen Stufenprofil, bei welchem gegebenenfalls die Umlenkkanten bogenförmig ausgebildet sein können, in die Filterwandbereiche über, bei welchen benachbarte Filterwände voneinander beabstandet sind. Die Strukturierung der Filterwände in der Höhe entspricht somit vorzugsweise der Strukturierung der Abflachungen in Durchströmungsrichtung des Filters. Hierdurch können im Wesentlichen allein durch Deformation der Filterwände, ohne dass Materialverdichtungen oder Materialdehnungen auftreten, einström- und/oder ausströmseitig an dem Filter Abflachungen bzw. Lagendoppelungen vorgesehen sein, die den Filter stirnseitig stabilisieren und zu günstigeren Strömungsverhältnissen führen.

Weiterhin können die Filterwände innerhalb des Filters Knickstellenbereiche bzw. Umlenkbereiche für das Fluid aufweisen, die einen Höhenversatz von den Knickstellen vor- und nachgelagerten Filterwandbereichen ergeben, wodurch die Durchströmungsrichtung innerhalb des Filters umgelenkt werden kann. Hierdurch kann der Filter den jeweiligen baulichen Gegebenheiten besser angepasst werden und/oder durch die Strömungsumlenkungen im Bereich der Knickstellen vorteilhafte Strömungsverhältnisse geschaffen werden.

Die Filterwände können insbesondere derart unter Ausbildung von Wellenbergen und Wellentälern strukturiert sein, dass deren Scheitellinien in Durchströmungsrichtung wechselweise geneigt zueinander verlaufen, so dass sich die Scheitellinien benachbarter Scheitel einer Filterwand in seitlicher Projektion schneiden. Hierdurch wird durch die sich in Durchströmungsrichtung verbreiternden und verschmälernden Filterwandprofilierungen ein Querversatz des durchströmenden Fluids bewirkt. Es versteht sich, dass die Wellungen im Wesentlichen bogenförmig oder im Wesentlichen zickzackförmig gestaltet sein können, wobei gegebenenfalls durch die Wellungen auch Rippen unterschiedlicher Höhe erzeugt werden können.

Alternativ oder in Kombination hiermit können die Umlenkbereiche des Filtermaterialbandes an der Einströmseite und/oder der Ausströmseite eine Höhe quer zu der Durchströmungsrichtung des Filters aufweisen, so dass benachbarte Filterwände stirnseitig durch die Umlenkbereiche voneinander beabstandet sind. Die Beabstandung kann insbesondere, beispielsweise durch stegförmige Umlenkbereiche, derart erfolgen, dass die Abstände auf Einströmseite und Ausströmseite unterschiedlich sind. Die Einströmseite kann somit beispielsweise eine größere Fläche aufweisen als die Ausströmseite des Filters. Unabhängig hiervon können sich durch diese Maßnahme die zwischen benachbarten Filterwänden ausgebildeten Strömungskanäle oder Strömungsspalte für das fluide Medium in Richtung auf die Ausströmseite hin verengen oder gegebenenfalls erweitern. Ferner können so Partikelfilter mit trapezförmiger, rautenförmiger oder anders gestalteter Form erzeugt werden.

Nach einer weiteren vorteilhaften Ausführungsform kann das mäanderförmig abgelegte Filtermaterialband, das insbesondere auch in Form einer Lagendoppelung entlang einer in Bandlängsrichtung verlaufenden Faltungslinie gefaltet sein kann, um eine Filterkörperlängsachse zusammengelegt bzw. zusammengerollt werden, so dass im Wesentlichen zylindrische Filter oder Filter mit halbkreisförmigen Segmenten herstellbar sind.

Vorzugsweise ist der Partikelfilter mit Versteifungselementen versehen, die die Filterwände stabilisieren, beispielsweise durch Unterstützung oder Durchdringung der Filterwände unter kraftabtragender Ankoppelung an diese.

Vorteilhafterweise sind langgestreckte Versteifungselemente vorgesehen, die zwischen benachbarten Filterwänden angeordnet sind, die die Filterwände durchdringen und/oder stirnseitig an dem Filter angeordnet sind und an den Filterwänden und/oder an den diese verbindenden Umlenkbereichen angreifen. Die Versteifungselemente können beispielsweise in Form von Drähten oder Bändern, strukturierten Bändern wie zickzackförmig oder wellenförmig abgelegten Bändern, Streckmetalllagen oder dergleichen ausgebildet sein. Die Versteifungselemente können lediglich in Form von Abstandshaltern zwischen benachbarten Filterwänden angeordnet sein und diese gegeneinander abstützen, die Versteifungselemente können auch alternativ oder zusätzlich mit den Seitenwänden des Filters oder einem vorgesehenen Filtergehäuse zugkraftaufnehmend verbunden sein, wobei die Versteifungselemente an einem oder vorzugsweise beiden Enden zugkraftaufnehmend festgelegt sind. Die Festlegung der Versteifungselemente kann durch kraft- und/oder formschlüssige Mittel wie beispielsweise durch Faltungen des Filtermaterialbandes, einschließlich von an diesen befestigten Seitenbereichen aus unterschiedlichem Material wie blechförmigen Streifen oder dergleichen festgelegt sein, gegebenenfalls können die Versteifungselemente mit einem Bereich des Partikelfilters wie den Seitenwänden auch stoffschlüssig verbunden sein, beispielsweise durch Verschweißen. Die Filterwände können lediglich bereichsweise in dem Filter vorgesehen sein, vorzugsweise wird jede Filterwand durch mindestens eines, vorzugsweise zwei, drei oder mehr Versteifungselemente stabilisiert. Insbesondere können die Versteifungselemente auch stirnseitig an der Einström- und/oder Ausströmseite des Filters angeordnet sein, beispielsweise in stirnseitiger Einbuchtung der Umlenkbereiche des Filtermaterialbandes eingelegt sein. Vorzugsweise erstrecken sich die Versteifungselemente jeweils durchgehend über die Erstreckung des Partikelfilters in der jeweiligen Richtung, beispielsweise über die gesamte Länge, Höhe, Breite oder eine Flächen- oder Raumdiagonale desselben.

Vorzugsweise sind langgestreckte Versteifungselemente, beispielsweise in Form von Drähten oder Bändern, auf Höhe der Abflachungen von Paaren bereichsweise beabstandeter benachbarter Filterwände, die insbesondere Lagendoppelungen bilden können, vorgesehen. Die Versteifungselemente erstrecken sich hierbei vorzugsweise senkrecht zur Durchströmungsrichtung des Filters, besonders bevorzugt auf Höhe der einström- und/oder ausströmseitigen Filterstirnseite. Hierdurch können insbesondere die Filterstirnseiten stabilisiert werden.

Unabhängig von der sonstigen Gestaltungsweise der Versteifungselemente sind diese vorzugsweise gegenüber den durch diese versteiften Filterwänden elektrisch isoliert, insbesondere um Kurzschlüsse zwischen Filterwänden bei elektrisch beheiztem Partikelfilter zu vermeiden, was beispielsweise erfolgt, wenn der Filter bei ausreichender Rußbelastung zur Regeneration ausgeheizt werden soll. Eine derartige elektrische Isolierung kann beispielsweise dadurch erfolgen, dass die Versteifungselemente eine elektrisch nichtleitende Umhüllung, beispielsweise durch keramisches Material oder Oxidschichtbildung, aufweisen. Die elektrische Isolierung kann gegebenenfalls auch nur bereichsweise vorgesehen sein.

Gegebenenfalls können mehrere Versteifungselemente, beispielsweise lagenweise, unter Ausbildung zwei- oder dreidimensionaler Verbände von Versteifungselementen miteinander verbunden sein, vorzugsweise in zugkraftaufnehmender Weise. Insbesondere können die Versteifungselemente in Form von ein- oder zweidimensionalen Streckmetalllagen bzw. Bereichen derselben ausgebildet sein.

Es versteht sich, dass gegebenenfalls auch die Versteifungselemente unter Einflechtung in die mäanderförmig abgelegte Struktur des Filtermaterialbandes abgelegt sein können, wobei sich die Längserstreckungsrichtungen der Versteifungselemente und des Filtermaterialbandes kreuzen können, vorzugsweise senkrecht zueinander angeordnet sind.

Vorzugsweise ist zumindest ein Versteifungselement, gegebenenfalls auch mehrere, vorgesehen, welches sich vollumfänglich um den Filter erstreckt und quer zur Erstreckungsrichtung der Filterwände verläuft. Das Versteifungselement kann hierbei die Einström- und Ausströmseite des Filters überbrücken oder alternativ oder gegebenenfalls auch gleichzeitig die beiden gegenüberliegenden Seitenwände des Filters. Insbesondere kann das Versteifungselement auch derart um den Filter herumgewickelt sein, dass in Art einer Wendelstruktur mehrere Umwickelungen mit einer bestimmten Ganghöhe vorgesehen sind, wodurch durch ein durchgehendes Versteifungselement der Partikelfilter über eine größere laterale Erstreckung bezüglich der Versteifungselementlängsrichtung oder über dessen gesamte Ausdehnung quer zum Versteifungselement durch dieses stabilisiert sein kann. Die Ganghöhe des Versteifungselementes entspricht vorzugsweise dem Abstand von Längsstrukturierungen der Filterwände, beispielsweise einem Rippenabstand oder Wellenabstand derselben. Hierdurch kann beispielsweise durch ein oder vorzugsweise zwei Versteifungselemente der gesamte Filter in Art eines zusammenhängenden Paketes stabilisiert werden. Die Endbereiche des Versteifungselementes sind vorzugsweise zugkraftaufnehmend an dem Filter oder an dem Gehäuse festgelegt, beispielsweise an einem anderen Bereich desselben Versteifungselementes oder sind an einer Seitenwand des Filters oder einer Filterwand zugkraftaufnehmend verbunden, beispielsweise durch Verklemmung.

Ferner sind vorzugsweise zwischen den Filterwänden oder stirnseitig an dem Filter des Filters Strukturelemente mit katalytisch wirksamen Material vorgesehen. Derartige Strukturelemente können insbesondere die oben beschriebenen Versteifungselemente sein oder separate zusätzliche Bauteile, ohne hierauf beschränkt zu sein. Die katalytisch wirksamen Strukturelemente können an den Filterwänden, Seitenwänden des Filters und/oder an einem vorgesehenen Filtergehäuse zugkraftaufnehmend verbunden sein. Insbesondere können die katalytisch wirksamen Strukturelemente zwischen benachbarten Filterwänden form- und/oder kraftschlüssig festgelegt sein, beispielsweise durch Einklemmung, Falzbildung oder dergleichen. Die katalytische Wirksamkeit kann sich auf eine Umsetzung einer Komponente des fluiden Mediums beziehen, beispielsweise auf eine Reinigung des fluiden Mediums wie Zersetzung von Stickoxiden zu Stickstoff und Sauerstoff, Oxidation von Komponenten des fluiden Mediums oder auf eine oxidative Umsetzung der zu separierenden Partikel.

Vorzugsweise weist der Partikelfilter zumindest eine oder mehrere Einströmseiten auf, die bei Einströmung des fluiden Mediums in den Partikelfilter aus unterschiedlichen Richtungen unter Eintritt des fluiden Mediums in zwischenbenachbarten Filterwänden ausgebildete Kanäle für das fluide Medium ermöglichen, wobei zumindest eine Ausströmseite vorgesehen ist, aus welcher das fluide Medium in einer unterschiedlichen Richtung zu zumindest einer Einströmrichtung aus dem Partikelfilter austritt. Die Kanäle können als "Krümmungskanäle" eine Richtungsänderung des durchströmenden Fluids gestatten. Derartige Partikelfilter können insbesondere auch als Krümmer eingesetzt werden. Die beiden unterschiedlichen Einströmrichtungen können beispielsweise einen Winkel von jeweils 90° oder 180° einschließen, ohne hierauf beschränkt zu sein. Gegebenenfalls kann das fluide Medium von zwei oder von drei Einströmseiten in den Partikelfilter eintreten und aus einer vierten Seite von dem Partikelfilter austreten. Hierbei kann der Partikelfilter insbesondere eine im Wesentlichen quaderförmige oder trapezoidale Gestalt aufweisen, ohne hierauf beschränkt zu sein. Die Ausströmrichtung kann einen Winkel von ca. 60° bis ca. 120°, insbesondere von ungefähr 90°, mit der Einströmrichtung einer oder zweier Einströmseiten des Filters aufweisen, wobei gegebenenfalls die Ausströmrichtung mit einer Einströmrichtung von einer dritten Seite her im Wesentlichen gleichgerichtet angeordnet sein kann. Es versteht sich, dass gegebenenfalls auch eine oder zwei der genannten Einströmseiten verschlossen sein können. Es kann somit allgemein die Einströmrichtung des fluiden Mediums in den Partikelfilter einen Winkel zu der Ausströmrichtung einschließen, insbesondere einen Winkel von 90°. Die Einströmfläche kann sich jeweils über einen Teil der Seitenfläche des Filters erstrecken, insbesondere über jeweils dessen gesamte Höhe in Stapelrichtung der Filterwände, oder über im Wesentlichen die gesamte Seitenfläche.

Ferner weist der Partikelfilter in einer Richtung quer zu der Durchströmungsrichtung des zu reinigenden Fluids sich durch diesen erstreckende, vorzugsweise durchgehende, Strömungskanäle für ein Spülfluid mit einer Spülfluideintrittsöffnung und einer Spülfluidaustrittsöffnung auf, durch die mittels des Spülfluids die von den Filterwänden zurückgehaltenen Partikel durch die Spülfluidströmungskanäle aus dem Filterkörper abführbar sind. Die Spülfluideintritts- und/oder austrittsöffnungen können in seitlich offene Bereiche der Durchströmungskanäle für zu reinigendes Fluid einmünden und/oder aus diesen ausmünden. Die Spülfluidkanäle erstrecken sich vorzugsweise über im Wesentlichen die gesamte Breite des Filters, vorzugsweise in Form von spaltförmigen Kanälen. Die Durchströmungskanäle weisen im Bereich der Spülfluidströmungspfade vorzugsweise ≥ 10 oder 25%, ≥ 50 oder 75% oder ca. 100% des mittleren oder maximalen Abstandes der Filterwände des Filterkörpers auf. Vorzugsweise sind die Spülfluideintritts- und/oder -austrittsöffnungen an Seitenflächen des Filters angeordnet, die von der Einström- und Ausströmseite verschieden sind.

Die Erfindung wird nachfolgend beispielhaft beschrieben und anhand der Figuren beispielhaft erläutert. Es zeigen:
Figur 1a-c ein profiliertes Band aus Filtermaterial in verschiedenen Faltungszuständen zur Herstellung eines Partikelfilters,
Figuren 2a, b schematische Darstellungen eines Partikelfilters aus mäanderförmig abgelegtem Filtermaterialband,
Figur 3 eine Fertigungslinie zur Herstellung eines Partikelfilters aus einem Filtermaterialband mit separaten eingeschobenen Lagen,
Figur 4 einen Partikelfilter mit Einström- und Ausströmstutzen in schematischer Darstellung,
Figur 5a, b perspektivische Darstellungen eines Filtermaterialbandes,
Figur 6 eine perspektivische Darstellung eines Ausschnittes eines teilweise hergestellten Partikelfilters,
Figur 7 eine perspektivische Darstellung eines Ausschnittes eines teilweise hergestellten Partikelfilters,
Figur 8 eine Abwandlung eines Partikelfilters nach Figur 6,
Figur 9 einen perspektivischen Teilausschnitt eines teilweise zusammengefalteten Filtermaterialbandes zur Herstellung eines Partikelfilters,
Figur 10 eine schematische Darstellung eines Partikelfilters mit unterschiedlich strukturierten Filterwänden,
Figur 11 eine schematische perspektivische Darstellung eines Partikelfilters mit Versteifungselement,
Figur 12a, b Detaildarstellungen eines Ausschnittes des Filtermaterialbandes nach Figur 9,
Figur 13 eine schematische Darstellung eines teilweise zusammengefalteten Filtermaterialbandes zur Herstellung eines Partikelfilters,
Figur 14 eine Abwandlung eines Filtermaterialbandes gemäß Figur 13,
Figur 15 eine Abwandlung eines Filtermaterialbandes nach Figur 13,
Figur 16a, b Schnittdarstellungen entlang den Linien A-A und B-B des Filtermaterialbandes nach Figur 13 in unterschiedlichen Faltungszuständen,
Figur 17 ein teilweise zusammengefaltetes Filtermaterialband zur Herstellung eines Partikelfilters,
Figur 18 eine Detailansicht des Filterbandes nach Figur 17,
Figur 19 eine perspektivische Ansicht eines Ausschnittes eines Filtermaterialbandes zur Herstellung eines Partikelfilters,
Figur 20 eine perspektivische Ansicht eines teilweise zusammengefalteten Filtermaterialbandes zur Herstellung eines Partikelfilters,
Figur 21a-f perspektivische Darstellungen von Ausschnitten von Filtermaterialbändern zur Herstellung von Partikelfiltern,
Figur 22a-c perspektivische Ansichten von Ausschnitten von Partikelfiltern mit Seitenwänden,
Figur 23 a, b perspektivische Ansichten eines Ausschnittes eines Filtermaterialbandes zur Herstellung eines Partikelfilters und eines Filtermaterialbandes nach Figur 23a in Anordnung in einem Gehäuse,
Figur 24a-d perspektivische Ansichten und Schnittdarstellungen von Ausschnitten eines Partikelfilters,
Figur 25 perspektivische Darstellungen eines teilweise zusammengefalteten Filtermaterialbandes zur Herstellung eines Partikelfilters mit unterschiedlichen Einströmrichtungen.
Figur 26 eine Darstellung eines Partikelfilters mit Spülleitungen zur Filterregeneration.

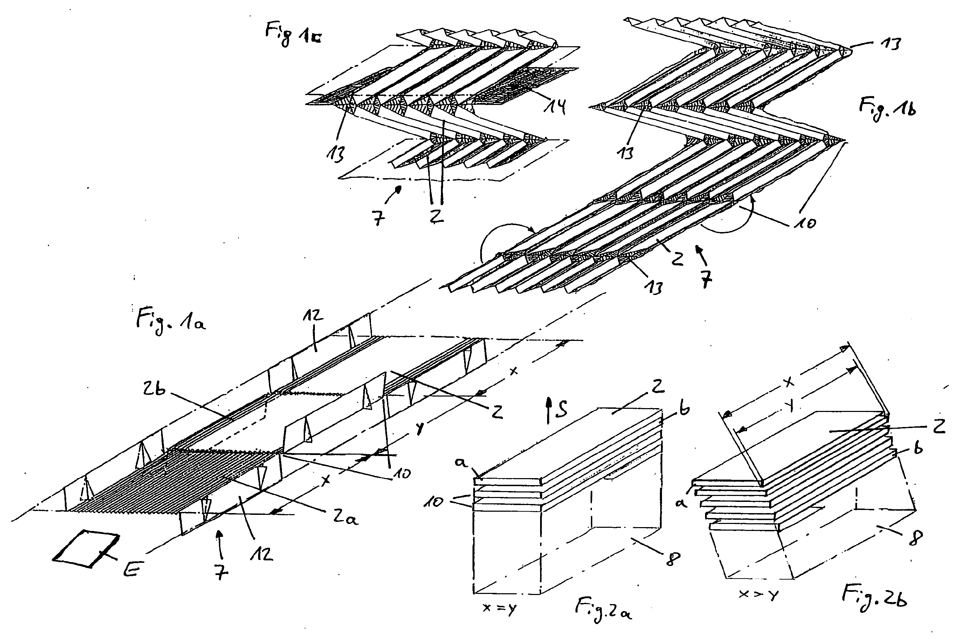

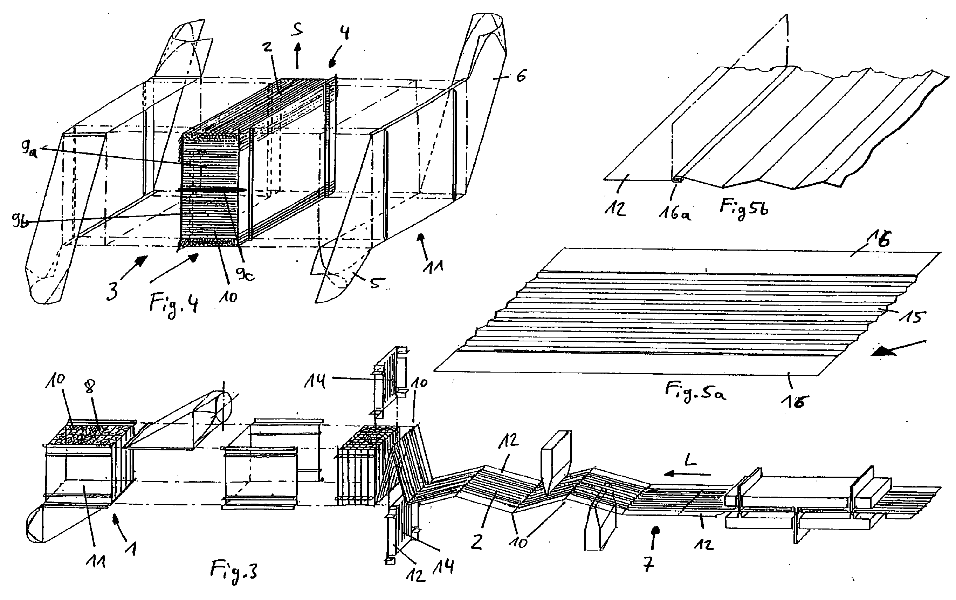

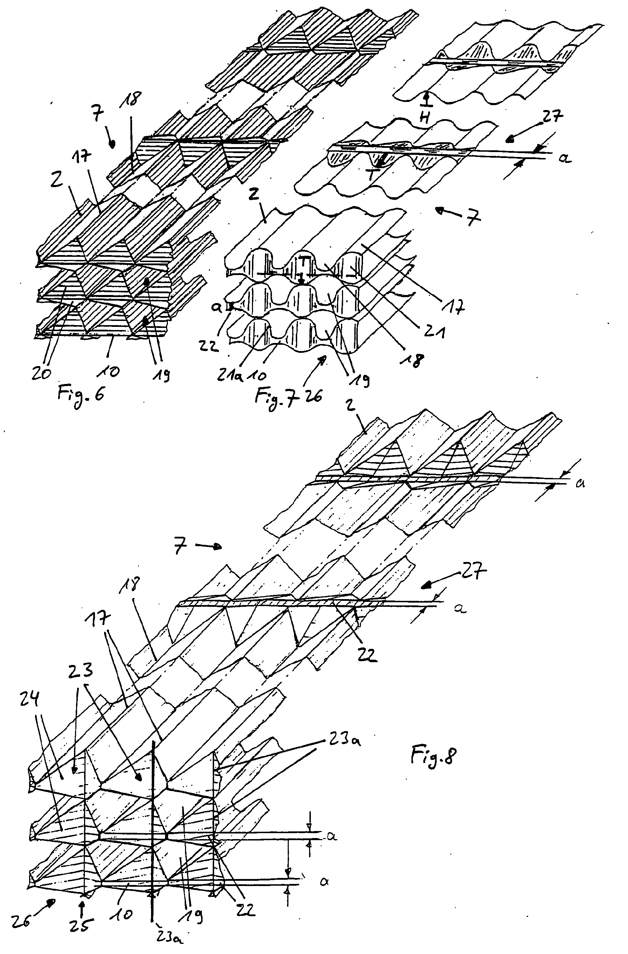

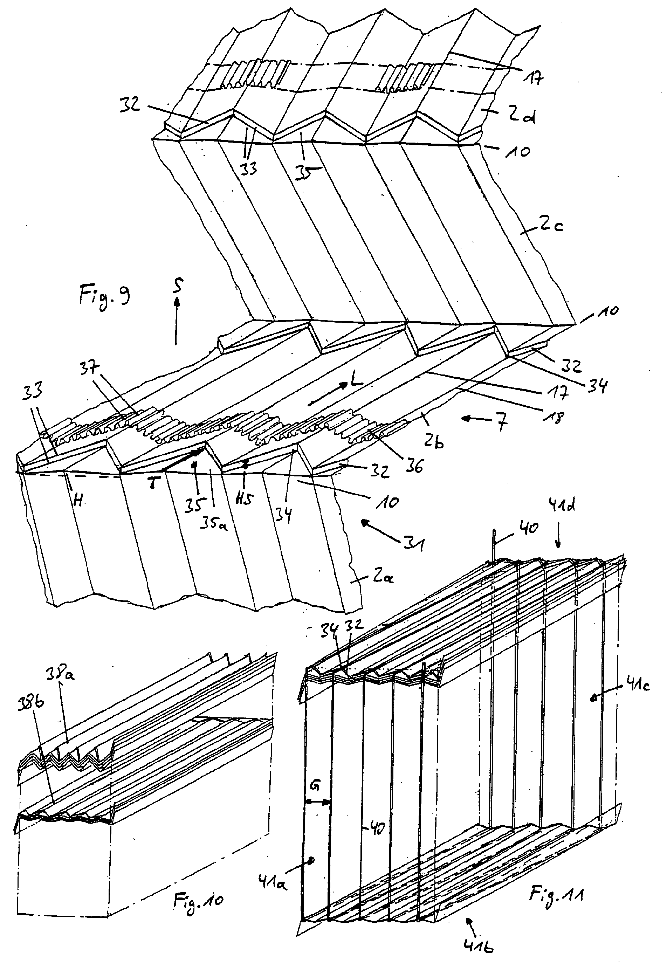

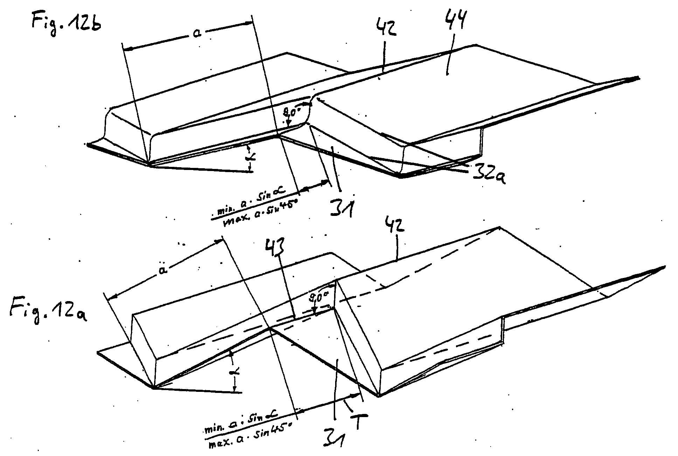

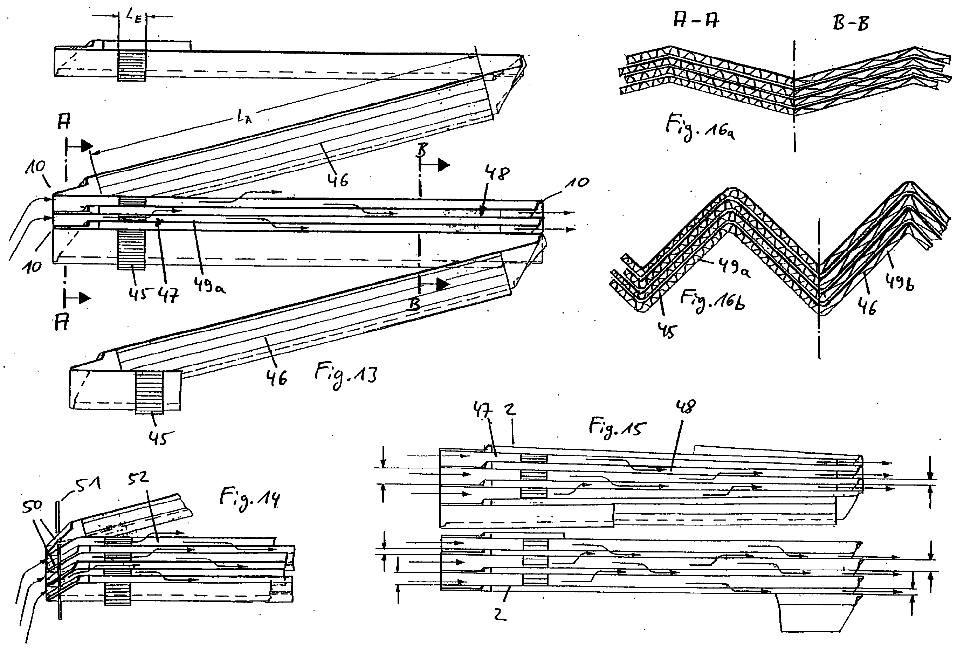

Die Figuren 1 bis 3 zeigen die Herstellung eines erfindungsgemäßen Partikelfilters, der beispielsweise als Rußfilter für Dieselbrennkraftmaschinen verwendbar ist. Der Partikelfilter 1 weist eine Vielzahl von zu durchströmenden Filterwänden 2 auf, die aus einem strukturbildenden Flächengebilde wie einem Drahtgeflecht bestehen können, welches mit einer keramischen Beschichtung versehen ist, um für das beispielsweise gasförmige Fluid permeabel zu sein und von diesem mitgeführte Partikel zumindest ab einer bestimmten Partikelgröße ausfiltern zu können. Es versteht sich, dass die üblichen zur Regeneration von Partikelfiltern versehenen Einrichtungen wie Heizeinrichtungen vorgesehen sein können. Der Partikelfilter weist hierbei eine Einströmseite 3 und eine Ausströmseite 4 auf, wobei, wie in Figur 4 durch die Einströmstutzen 5 und Ausströmstutzen 6, die Bestandteile eines zugeordneten Gehäuses sein können, kann die Anströmrichtung (Pfeil) auch schräg zu der Hauptebene der Filterwände 2 und zur Durchströmungsrichtung des fluiden Mediums durch den Filter (Pfeil; Figur 4) sein. Die Filterwände bestehen erfindungsgemäß aus einem durchgehenden Band 7 aus Filtermaterial, welches durch geeignete Profilierungsmittel wie Prägewalzen unter Ausbildung von vorzugsweise im Wesentlichen in Bandlängsrichtung (Pfeil; Figur 3) verlaufenden rippenartigen Strukturierungen versehen sein kann. Das durchgehende Band ist vorzugsweise zumindest in dem Bereich filterwirksamer Filterwände einteilig in einer Länge ausgeführt ist, um einen Filterkörper 8 herstellen zu können, der zumindest in einer Dimension den Partikelfilter bildet, wobei aber auch mehrere Filterkörper neben- oder übereinander und/oder hintereinander angeordnet sein können. Wie in Figur 4 angedeutet, können gegebenenfalls auch mehrere Filtersegmente 9a, 9b mit jeweils einer Vielzahl von Filterwänden 2 vorgesehen sein, wobei die Enden der die Filtersegmente erzeugenden Bänder miteinander verbunden sein können, beispielsweise durch Falzbildung oder eine Schweißverbindung oder bei welcher die Bandenden benachbarter Filtersegmente an einem zumindest im wesentlich partikeldichten Halteteil wie einer Klemm- oder Halteschiene 9c verbunden sind, wobei die Halteschiene lageunveränderlich oder durch Befestigungsmittel ausreichend in ihrer Solllage stabilisiert aber noch geringfügig lageveränderlich sein kann, beispielsweise an dem Gehäuse festgelegt sein kann.

Das Filtermaterialband wird zur Herstellung des Partikelfilters an Umlenkbereichen 10 umgelenkt und hierbei vorzugsweise mäanderförmig unter Umlenkung von zumindest ungefähr 180° abgelegt, so dass durch die in Stapelrichtung S (Figur 2a, 4) abgelegten Bereiche des Filterbandes, die Filterwände 2 ausbilden, zu einem Filter oder zumindest zu einem Segment desselben zusammengelegt werden. Durch die Umlenkbereiche, die sich über mehr als die Hälfte der Erstreckung des Filters, beispielsweise eine Erstreckungsrichtung des Filters oder unter Ausbildung von Seitenwandbereichen darüberhinaus erstrecken, wird mit geringem Fertigungsaufwand ein ausreichend stabiler Filter und auch bei Beanspruchungen wie dynamischer Kräften, Temperaturlastwechseln oder dergleichen zuverlässig dichter Filter geschaffen.

Das unter Ausbildung von Umlenkbereichen 10 abgelegte Band, das vorzugsweise mäanderförmig abgelegt ist (Figuren 1-3), kann derart gefaltet und derart in dem Gehäuse 11 angeordnet sein, dass die Umlenkbereiche einströmseitig und/ oder ausströmseitig angeordnet sind.

Die Umlenkbereiche 10 sind einstückig in dem Band integrierte Bereiche desselben, die sich vorzugsweise über die gesamte filterwirksame Breite des Bandes oder Gesamtbreite des Bandes erstrecken. Die gesamte Anordnung der Filterwände des Partikelfilters 9 kann somit aus einem durchgehenden Band aus Filtermaterial bestehen. Gegebenenfalls können jedoch mehrere Filtermaterialbänder über im Wesentlichen in Bandlängsrichtung verlaufende Fügelinien unter Verbreiterung des Bandes miteinander verbunden sein, beispielsweise indem benachbarte Bänder an ihren seitlichen Randbereichen miteinander verschweißt oder zusammengefaltet sind. Die Umlenkbereiche erstrecken sich dann hierbei vorzugsweise über die filterwirksame Breite der jeweiligen Teilbänder oder die jeweilige Teilbandgesamtbreite.

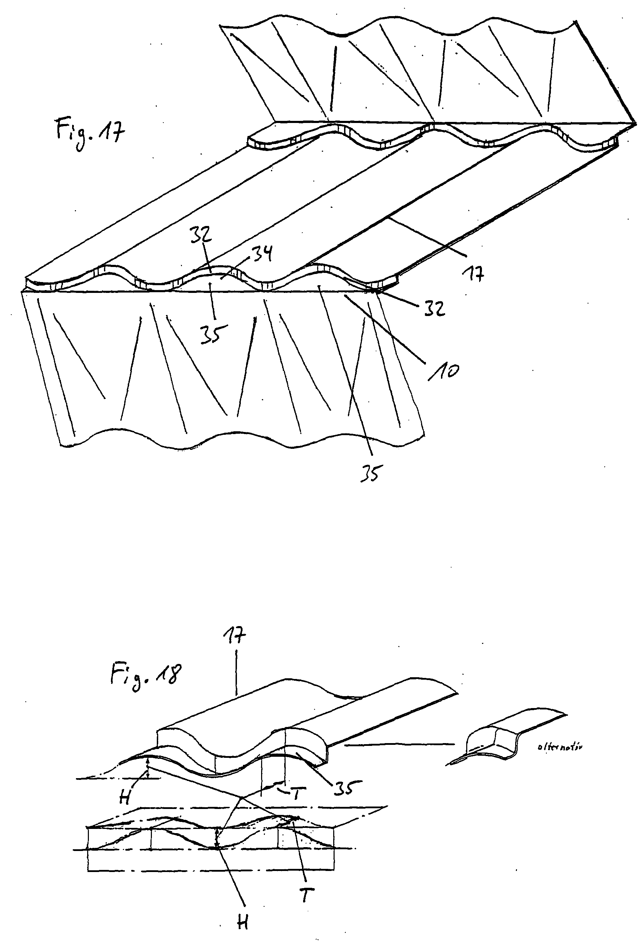

Gemäß Figur 1a können an dem Filtermaterialband seitliche Bereiche 12 vorgesehen sein, die gegenüber der Hauptebene E der Filterwände abgebogen sind, vorzugsweise um ca. 90°, und die unter Ausbildung seitlicher Stabilisierungsbereiche des Filterkörpers oder unter Ausbildung einer im Wesentlichen geschlossenen und partikeldichten Seitenwand miteinander verbunden sein können. An benachbarten Filterwänden werden die seitlichen Bereiche vorzugsweise in umgekehrte Richtungen abgefaltet (Figur 1a). Die Seitenbereiche können aus Filtermaterial oder gemäß Fig. 5 aus einem anderen Material bestehen.

Benachbarte Filterwände 2a, 2b, die aus benachbarten und durch Umlenkbereiche 10 getrennten Abschnitten des Filtermaterialbandes bestehen, können die gleiche Erstreckung in Bandlängsrichtung (X=Y) aufweisen, so dass ein im Wesentlichen quaderförmiger Filterkörper entsteht (Figur 1a, 2a), die Längen der Filterwände in Bandlängsrichtung können gegebenenfalls auch unterschiedlich sein (X > Y), so dass ein schiefer, beispielsweise trapezoidaler, Filterkörper entsteht (Figur 2b). Es versteht sich, dass in beiden Ausführungsformen gemäß Figur 2a, 2b die stirnseitigen Umlenkbereiche gleiche Höhen a, b an Einströmund Ausströmseite oder unterschiedliche Höhen aufweisen können.

Gemäß Figur 1b ist das Band 7 derart profiliert, dass nach Zusammenfalten des Bandes unter Ausbildung der Umlenkbereiche gemäß Figur 1c benachbarte Filterwände 2a, 2b, die eine Lagendoppelung des Bandes ausbilden, invers zueinander strukturiert sind, d. h. mit ihren Wellenrücken bzw. Wellentälern jeweils aufeinander zuweisen. Um eine Zusammenfaltung des strukturierten Bandes zu ermöglichen, sind die Umlenkbereiche 10 mit Einbuchtungen 13 versehen, so dass die Umlenkung der Bandabschnitte bei gegebener Profilierung des Bandes aufgrund der weitestgehend fehlenden Duktilität im Wesentlichen oder vollständig ohne Stauchung oder Dehnung des Filtermaterials erfolgen kann, sondern durch Deformation unter Umlenkung von Bandabschnitten .

Gemäß Figur 1c und Figur 3 können zwischen die jeweils benachbarten und durch einen Umlenkbereich 10 miteinander verbundenen Filterwände 2a, 2b Lagen 14 eingelegt sein, die im Wesentlichen die Ausdehnung der Filterwände um deren Hauptebene haben können, wobei die Lagen 14 beispielsweise mit einem katalytisch wirksamen Material versehen sein können, welches chemische Umsetzungen des fluiden Mediums katalysieren kann, wie sie bei einer Abgasreinigung vorteilhaft sein kann. Die Lagen können insbesondere für das Fluid permeabel und als gitterartige Gebilde, Maschendrähte, Streckmetalllagen, Vlieslagen oder dergleichen ausgeführt sein. Die Lagen können auch streifenförmig ausgebildet sein und sich nur über eine Teilbreite oder Teillände des Filters erstrecken. Gemäß Figur 3 können die separat eingeführten Lagen 14 gegenüber deren Hauptebenen abgebogene seitliche Bereiche 12 aufweisen, um eine Seitenwand eines Filters aufzubauen oder den aus den Filterwänden bestehenden Filterkörper zu stabilisieren, die alternativ oder zusätzlich zu den Seitenbereichen 12 des Bandes vorgesehen sein können.

Gemäß Figur 5a besteht das eine Vielzahl von Filterwänden erzeugende Band aus einem zentralen Abschnitt 15, der vollständig aus Filtermaterial besteht, und beidseitig an diesem angebrachten Längsstreifen 16, die mit dem seitlichen Randbereich des zentralen Bandes verbunden sind, beispielsweise durch eine Schweißverbindung oder durch eine Falzverbindung 16a, wie sie in Figur 5b beispielhaft dargestellt ist. Die Längsstreifen 16 können aus einem fluidundurchlässigen Blechmaterial bestehen, so dass fluiddichte Seitenwände des Filters auf einfache und kostengünstige Weise aufgebaut werden können. Es versteht sich, dass unabhängig hiervon die Filterwände vorzugsweise über deren gesamte Flächenausdehnung, sofern diese in einem filterwirksamen und von dem zu reinigenden Fluid zugänglichen Bereich des Partikelfilters angeordnet sind, aus Filtermaterial bestehen. Das Band aus Filtermaterial kann somit ein über seine gesamte Länge und Breite einheitliches Flächengebilde darstellen.

Figur 6 zeigt einen Ausschnitt eines mäanderförmig abgelegten Filtermaterialbandes 7 zur Erzeugung eines Partikelfilters, wobei benachbarte und durch sich über die Bandbreite erstreckende Umlenkbereiche 10 verbundene Filterwände 2 invers zueinander strukturiert sind. Die Strukturierung erfolgt hier durch im Wesentlichen zickzackförmige Wellungen unter Ausbildung von kantenförmigen Wellenbergen 17 und kantenförmigen Wellentälern 18. Die Wellenberge benachbarter Filterwände liegen vorzugsweise linienförmig über deren gesamte Länge aneinander an, durch die inverse Anordnung der Wellentäler werden im Wesentlichen eindimensionale Strömungskanäle 19 für das fluide Medium ausgebildet, wobei das fluide Medium durch die Filterwände durchtretend auf der gegenüberliegenden Seite über eindimensionale Strömungskanäle aus dem Filter ausströmen kann. Die Umlenkbereiche 10 sind hier im Wesentlichen kantenförmig ausgebildet, wobei sich an diese in Richtung auf das Filterinnere zurückspringende gegen die Längsrichtung der Strömungskanäle 19 schräggestellte Flächen 20 ausgebildet sind. Neigung und Ausdehnung der Flächen 20 sind derart gewählt, dass das Band praktisch ohne Dehnung oder Stauchung sondern nur durch Ausbildung der gezeigten Umlenk- und Knickbereiche unter Erhalt der Profilierung mäanderförmig abgelegt ist. Die Spitzen der Dreiecksflächen 20 weisen hierbei in Längsrichtung der Strömungskanäle 19.

Figur 7 zeigt ein ähnlich wie Figur 6 mäanderförmig abgelegtes Band mit invers profilierten benachbarten Filterwänden 2, wobei die Profilierung jedoch in Form einer Wellung unter Ausbildung bogenförmiger Wellenberge 17 und Wellentäler 18 erfolgt, wobei die Wellenberge 17 wiederum unter Ausbildung eindimensionaler Strömungskanäle 19 linienförmig aneinander anliegen. Die Umlenkbereiche 10 sind hierbei unter Ausbildung wellenförmiger Einbuchtungen 21 ausgebildet, wobei das Querschnittsprofil der Wellenberge 17 im Wesentlichen oder exakt dem Profil der Einbuchtungen 21 auf Höhe der Umlenkbereiche 10 in Erstreckung parallel zu den Filterwänden entspricht, um eine dehnungs- und stauchungsarme Umlenkung des profilierten Bandes zu möglichen. Die Umlenkbereiche gemäß Figur 7 weisen stegförmige Bereiche 22 mit einer über die Breite des Bandes gleichbleibenden Steghöhe a auf, wobei die Steghöhe a auf Einströmseite und Ausströmseite gleich oder unterschiedlich sein kann, um die Geometrie des Filterkörpers zu variieren. Entsprechendes ist auch nach Figur 6 möglich.

Die Tiefe T der Einbuchtung 21 parallel zur Längsrichtung der Strömungskanäle 19 bzw. Längsrichtung der Wellenberge ist somit im Wesentlichen gleich der den Steg a übersteigenden Höhe H der Wellenberge 17. Die Frontseite der Einbuchtung 21 verläuft somit im Wesentlichen senkrecht zur Längserstreckung der Wellenberge 17 bzw. Längsrichtung der Strömungskanäle 19. Es versteht sich, dass gegebenenfalls die im Wesentlichen kantenförmige Einfassung der Einbuchtungen 21 durch die Begrenzungskanten 21a auch abgeflacht oder bogenförmig ausgebildet sein kann.

Figur 8 zeigt eine weitere Möglichkeit der Profilierung des Filtermaterialbandes unter Ausbildung invers strukturierter benachbarter Filterwände, wobei die Umlenkbereiche 10 wiederum Stege 22 mit einer Höhe a aufweisen können. Im Unterschied zu Figur 6 sind hier Einbuchtungen 23 ausgebildet, um wiederum eine praktisch dehn- und stauchungsfreie Umlenkung eines profilierten Bandes zu ermöglichen, wobei der ins Filterinnere weisende Endbereich 23a der Einbuchtung im Wesentlichen linienförmig, vorzugsweise geradlinig ausgeführt ist und im Wesentlichen oder exakt senkrecht zur Erstreckung des Umlenkbereiches 10 und/oder zur Längserstreckung der als Wellenberge 17 ausgeführten Rippen verläuft. Die im Wesentlichen ebenen Flächen 24 der Einbuchtungen weisen somit im Filterinneren angeordnete gemeinsame Kanten auf, wohingegen nach Figur 6 die gemeinsame Kante von angrenzenden Flächen 20 benachbarter Filterwände stirnseitig angeordnet ist. Gemäß Figur 8 können somit Einbuchtungen 23 jeweils angrenzender Paare von Filterwänden durchgehende Einbuchtungslinien 25 ausbilden, die sich quer, insbesondere senkrecht, zu den Hauptebenen der Filterwände erstrecken. Durch diese Einbuchtungen werden die Stirnseiten, die insbesondere Einström- und Ausströmseiten des Filters darstellen können, stabilisiert, in die linienförmigen Einbuchtungen 23 können weiter unten beschriebene Versteifungselemente 23a eingelegt werden, die durch die Einbuchtungen lateral verschiebungsgesichert sind, beispielsweise in Art des Versteifungselementes 40 nach 11. Es versteht sich, dass die Einbuchtungen 23 nicht auf die gezeigte Ausführung beschränkt sind, sondern dass die die Flächen 24 begrenzenden Kanten gegebenenfalls auch geknickt oder bogenförmig ausgebildet sein können, wodurch die Umlenkbereiche des Bandes vielfältig strukturiert sein können.

Ferner versteht es sich aus den Figuren 7 und 8, was entsprechend auch für andere Ausführungsformen des erfindungsgemäßen-Filters gelten kann, dass die Steghöhen a an Einströmseite 26 und Ausströmseite 27 verschieden sein können, wobei beispielsweise einströmseitig die Wellenberge benachbarter Filterwände, die unterschiedlichen Lagendoppelungen zuzuordnen sind, im Wesentlichen punktförmig oder linienförmig über eine Ausdehnung aneinander liegen können, die im Wesentlichen kleiner als die Länge der Strömungskanäle 19 ist, beispielsweise einem Zehntel oder weniger derselben, wobei die Wellenberge benachbarter invers zueinander strukturierter Filterwände mit zunehmender Erstreckungstiefe in den Filter hinein voneinander zunehmend beabstandet werden können, so dass sich die im Wesentlichen eindimensionalen Strömungskanäle an der Einströmseite 26 zu im Wesentlichen spaltförmigen Strömungskanälen an der Ausströmseite 27 erweitern, die sich quer zur Durchströmungsrichtung über mehrere Strömungskanäle oder die gesamte Bandbreite bzw. Filterbreite erstrecken können.

Gemäß den Figuren 1 bis 8 ist das mäanderförmig abgelegte Band aus Filtermaterial derart abgelegt, dass das Band mit seiner Längsrichtung L (Pfeil; Figur 3) im Wesentlichen parallel zur Durchströmungsrichtung des fluiden Mediums bzw. der Erstreckungsrichtung der im Wesentlichen eindimensionalen Strömungskanäle 19 gemäß Figur 6 bis 8 verläuft. Es versteht sich, dass gegebenenfalls das Band 7 gemäß Figur 3 auch entlang einer Faltungslinie zumindest unter Lagendoppelung gefaltet werden kann und dass das derart lagengedoppelte Band mäanderförmig abgelegt wird, wie dies in Figur 3 für das einlagige Band veranschaulicht wird. Die Umlenkbereiche können hierbei nach außen fortgeführt und umgefaltet sein, um die mäanderförmige Ablage des lagengedoppelten Bandes zu ermöglichen. Hierdurch können Partikelfilter hergestellt werden, bei denen die Anströmrichtung des Filters quer bzw. senkrecht zur Bandlängsrichtung erfolgt, so dass beispielsweise die Faltungslinie eine Anströmkante für das fluide Medium darstellt und die Umlenkbereiche 10 des Bandes an den Seitenwänden des Filters angeordnet sind.

Figur 9 zeigt ein mäanderförmig abgelegtes Band 7 aus Filtermaterial mit als Rippen in Form von Wellenbergen 17 und dazwischen angeordneten Wellentälern 18 ausbildenden Profilierungen, die sich im Wesentlichen in Bandlängsrichtung L bzw. Durchströmungsrichtung erstrecken, wobei nach dem Ausführungsbeispiel die Profilierung im Wesentlichen zickzackförmig ausgebildet ist. Benachbarte Filterwände sind nach dem Ausführungsbeispiel kongruent zueinander strukturiert, d.h. mit ineinander eingreifenden Wellenbergen und -tälern. Unter Betrachtung einer vorgegebenen Seite des Partikelfilters wie beispielsweise der Einströmseite 31 nach Figur 9 bilden benachbarte Filterwände 2a, 2b; 2c,2d, die durch einen dieser Seite zugeordneten Umlenkbereich 10 unmittelbar miteinander verbunden sind, eine Lagendoppelung, so dass die Filterwände 2a, 2b einer ersten und die Filterwände 2b, 2c einer zweiten Lagendoppelung zuzuordnen sind. Zumindest eine Filterwand einer jeweiligen Lagendoppelung ist hierbei mit einer Stufe 32 bzw. einem Stufenabsatz versehen, wobei der Stufenabsatz im Wesentlichen rechtwinklige oder auch bogenförmige Umlenkkanten 33 (vgl. auch Fig. 12b) aufweisen kann. Nach dem Ausführungsbeispiel ist jeweils eine Filterwand 2b, 2d mit zwei derartigen Stufen 32 versehen, wobei beide Stufen in Durchströmungsrichtung des Filters bzw. in Längsrichtung der in Form von Wellenbergen 17 ausgebildeten Rippen ansteigen, so dass sich der Höhenversatz der Stufen über die Erstreckungsrichtung der jeweiligen Filterwand addiert. Die Stufen erstrecken sich hierbei im Wesentlichen wellenförmig ausgehend von einem dem Umlenkbereich 10 zugewandten Bereich in das Filterinnere hinein, so dass die Stufen 32 nach dem Ausführungsbeispiel im Wesentlichen zickzackförmig in der Filterwandebene verlaufen. Sind die Rippen eher wellig mit bogenförmigen Wellenbergen und Wellentälern ausgebildet, verlaufen die Stufen im Wesentlichen vorzugsweise ebenfalls in bogenförmigen Wellungen mit einer Erstreckungsrichtung in Strömungsrichtung bzw. Längsrichtung der Wellenberge 17 (siehe auch Figuren 17, 18). Bezogen auf die Stapelungsrichtung S (Pfeil) sind die der Filterwand bzw. Einströmseite zugewandten Bereiche der Stufen 32 in den Wellentälern angeordnet und die von den Umlenkbereichen 10 am weitesten beabstandeten Bereiche 34 der Stufen, an welchen sich die Wellung der Stufen umkehrt, ist auf Höhe der Wellenberge 17 angeordnet. Die Höhe der Filterwandwellungen und die Höhe der Stufen 32 addieren sich hier somit. Die stirnseitigen Bereiche der Stufen 32 sind in etwa auf Höhe der Umlenkbereiche 10 angeordnet, es versteht sich, dass diese gegebenenfalls auch durch einen stegartigen Bereich von der Partikelfilterwand bzw. Stirnseite beabstandet sein können. Die Tiefe T der durch die Stufen ausgebildeten Einbuchtungen 35, die sich zur Filterstirnseite bzw. den Umlenkbereichen 10 hin aufweiten, ist hier ein Vielfaches der Höhe H der Rippungen bzw. Wellenberge 17. Gleichzeitig hiermit oder unabhängig hiervon kann die Höhe HS der Stufen 32 in Stapelrichtung S im Wesentlichen oder gleich der Höhe H der rippenartigen Strukturierungen der Filterwände, die in Strömungsrichtung verlaufen, entsprechen.

Nach dem Ausführungsbeispiel sind die jeweils gegenüberliegenden Filterwände einer Lagendoppelung, d. h. die Filterwände 2a, 2c, die den Filterwänden 2b, 2d zugeordnet sind, nicht mit einer Stufe versehen sondern lediglich mit einer Längsprofilierung, die der Wellenberge und Wellentäler erzeugenden Profilierung der mit Stufen versehenen Filterwände 2b, 2c entspricht. Auf Höhe der Einbuchtungen 35 liegen somit die Filterwände der ersten Gruppe, d. h. die Filterwände 2a, 2c an den Filterwänden 2b, 2d der zweiten Gruppe an, vorzugsweise jeweils über größere Bereiche, insbesondere flächig über die Ausdehnung der Einbuchtungen, wodurch Abflachungen 35a der Filtertaschen ausgebildet werdenn. Hierdurch werden die Filterwände im Bereich der Umlenkbereiche zusätzlich stabilisiert, die insbesondere die Einström- und Ausströmbereiche des Filters darstellen können, des Weiteren werden strömungsgünstige Verhältnisse für das Einströmen des fluiden Mediums geschaffen.

Durch die Stufen 32 werden somit Filtertaschen durch gegenüberliegende, voneinander beabstandete Filterwände geschaffen. Die Filtertaschen sind hierbei wechselweise zur Einströmseite und zur Ausströmseite des Filters hin geöffnet. Gegebenenfalls können die Taschen auch eine größere Weite in Stapelrichtung S aufweisen als die Höhe der Stufen 32 beträgt, wozu benachbarte Filterwände geneigt zueinander bzw. geneigt zur Längsrichtung des Filters verlaufen können.

Nach dem Ausführungsbeispiel sind die Filterwände jeweils einer Gruppe mit jeweils zwei Stufen 32 versehen, gegebenenfalls können an den Wänden der genannten Gruppe auch weitere dazwischen angeordnete Stufen vorgesehen sein und/oder es können Filterwände der zweiten Gruppe, nach dem Ausführungsbeispiel die Filterwände 2a, 2c mit Stufen versehen sein, wobei die Stufen der beiden Gruppen von Filterwänden sich unter Aufweitung der von den Filterwänden gebildeten Filtertaschen addieren oder gegebenenfalls auch subtrahieren können.

Werden zwischen benachbarten Filterwänden Filtertaschen ausgebildet, beispielsweise bei einer Ausgestaltung nach Figur 9, wobei die Filtertaschen über Teilbereiche oder die gesamte Breite des Filters erstreckende Spalte ausbilden, so können in diesen Spalten sich quer zur Durchströmungsrichtung erstreckende Versteifungselemente 36 vorgesehen sein, die benachbarte Filterwände voneinander beabstanden. Nach dem Ausführungsbeispiel ist das Versteifungselement 36 in Form eines gewellten Bandes ausgeführt, wobei die jeweiligen Wellenberge 37 Abstützungen für die Filterwände bilden. Das Versteifungselement 36 kann hierbei mit einem katalytisch wirksamen Material beschichtet sein oder gegebenenfalls als Heizelement ausgebildet sein. Das Versteifungselement kann sich im Wesentlichen über die Breite des Filters erstrecken oder in die Seitenwände desselben übergehen und an diesen festgelegt sein oder auf andere Weise an dem Filter lagegesichert sein.

Gemäß Figur 10 können, wie schematisch dargestellt ist, die rippenförmigen Längsprofilierungen 38a, 38b des Bandes, die in verschiedenen Filtern realisiert sein können, eine unterschiedliche Steilheit bzw. Breite aufweisen, wodurch der Strömungswiderstand des fluiden Mediums quer zur Durchströmungsrichtung (Pfeil) veränderbar ist.

Gemäß Figur 11 ist ein eindimensionales Versteifungselement 40 in Form eines Drahtes, gegebenenfalls auch eines Bandes oder dergleichen, vorgesehen, welches wendelförmig um den Filter 41 gewickelt ist und hierbei die Einströmseite 41a, die Bodenseite 41b, die Ausströmseite 41c und die Oberseite 41d des Filters umspannt. Das Versteifungselement ist hierbei in mehreren Ganghöhen G um den Filter gewickelt und erstreckt sich somit über mehrere rippenförmige Längsprofilierungen bzw. Wellenberge des Bandes. Vorzugsweise erstreckt sich das Versteifungselement durchgehend in der dargestellten Wickelanordnung über die gesamte Breite des Filters. Die Ganghöhe des wendelförmig gewickelten Versteifungselementes kann hierbei dem einfachen Rippenabstand benachbarter Rippen bzw. Wellenbergen entsprechen, aber auch hiervon verschieden sein, vorzugsweise einem ganzzahligen Vielfachen hiervon. Gegebenenfalls kann das Versteifungselement die Wellenberge an der Ober- bzw. Bodenseite des Filters auch schneiden, nach dem Ausführungsbeispiel ist dies nicht der Fall, das Versteifungselement erstreckt sich ausgehend von einem Wellental an einer Stirnseite zu dem nächstbenachbarten Wellenberg. Die Versteifungselemente sind hierbei auf Höhe der Wellenberge über die Oberkante bzw. den größten Tiefenbereich 34 (siehe Figur 9) der jeweiligen Stufe 32 geführt und hierdurch beidseitig verschiebungsgesichert. Der Filter kann somit durch ein einziges Versteifungselement stabilisiert werden, wobei auch weitere vorgesehen sein können.

Es versteht sich, dass in sämtlichen Ausführungen des Filters die Profilierungen auch asymmetrisch ausgeführt sein könnenn, d.h. mit unterschiedlichen Breiten und/oder Steigungen der Profilierungen beidseitig der jeweiligen Scheitel bzw. Wellenrücken.

Figur 12a,b zeigt eine vergrößerte Darstellung der Stufe 32 nach Figur 9, wobei veranschaulicht ist, dass auch im Bereich der Einbuchtung 31, die eine Abflachung der weiter innen liegenden Filtertasche bildet, indem die benachbarten Filterwände aneinander liegen, im Wesentlichen eine 90°-Stufe darstellen kann. Der Wellenberg 42 der nach dem Ausführungsbeispiel zickzackförmig ausgeführten Wellung verläuft hiermit parallel zu dem Wellenberg 43 des abgeflachten Bereichs. Vorteilhafterweise beträgt die minimale Tiefe T der Einbuchtung dem Produkt aus der Breite a der Profilierung und dem Sinus α der Abbiegung der Filterwand von dem benachbarten Wellental aus gemessen (a x sin α), maximal vorzugsweise dem Produkt aus a x sin 45°. Es versteht sich, dass Entsprechendes auch für wellenförmige Profilierungen der Filterwand unter Ausbildung bogenförmiger Wellenberge und Wellentäler gilt.

Wie in Figur 12b dargestellt ist, kann die Stufe 32 auch bogenförmige Übergangsbereiche 32a der Stufe zur Einbuchtung 31 und zur angrenzenden Filterwand 44 hin, die eine Filtertasche ausbildet, aufweisen.

Die Figuren 13 bis 16 zeigen einen Partikelfilter, der im Wesentlichen durch eine Faltung eines Filtermaterialbandes entsprechend Figur 9 ausgebildet ist, wobei im Folgenden auf weitere Einzelheiten eingegangen werden soll, die jedoch auch im Zusammenhang mit anderen Ausführungsformen wie insbesondere den Ausführungsbeispielen nach den Figuren 17 und 18 realisiert sein können, aber auch gemäß allen anderen Ausführungsbeispielen, sofern diese dort zweckdienlich sind.

Nach Figur 13 und 16 weist der Filter zumindest zwei unterschiedliche Arten von Versteifungselementen 45, 46 auf, wobei eine erste Art von Versteifungselementen 45 in den einströmseitig geöffneten Filtertaschen 47 angeordnet ist und die zweite Art von Versteifungselementen 48 in den ausströmseitig angeordneten Filtertaschen 48, wobei die Filtertaschen jeweils durch benachbarte, durch Umlenkbereiche 10 miteinander verbundene Filterwände gebildet werden. Die Figuren 16a, 16b zeigen hierbei Querschnittsanordnungen des Filters gemäß Figur 13 auf Höhe der Linie A-A (Figur 16, rechts) bzw. auf Höhe der Linie B-B (Figur 16, rechts). Die Versteifungselemente 47 weisen eine geringere Steifigkeit bzw. Versteifungswirkung gegenüber benachbarten Filterwänden auf, die Versteifungselemente 46 eine erhöhte Versteifungswirkung. Hierdurch kann bei geringem Materialeinsatz und geringer Veränderung der Strömungsverhältnisse die Ausströmseite des Filters stärker stabilisiert werden, als die ebenfalls stabilisierte Einströmseite, da der Druck des fluiden Mediums einströmseitig auf die Filterwände höher ist als ausströmseitig, wodurch die Filterwände zur Ausströmseite hin druckbeaufschlagt werden. Das einströmende Medium kann hierdurch im Wesentlichen in spaltförmigen Strömungskanälen 49a geführt werden, wobei die Spalte sich quer zur Strömungsrichtung erstrecken, ausströmseitig im Wesentlichen in eindimensionalen Strömungskanälen 49b, da sich hier die wellenförmigen Versteifungselemente 45 einsströmseitig nur über kurze Erstreckung LE, die Versteifungselemente über eine längere Erstreckung LA, hier praktisch die gesamte Filterlänge, erstrecken. Der Durchtritt des fluiden Mediums durch die Filterwände ist in Figur 13 durch die gebogenen Pfeile dargestellt.

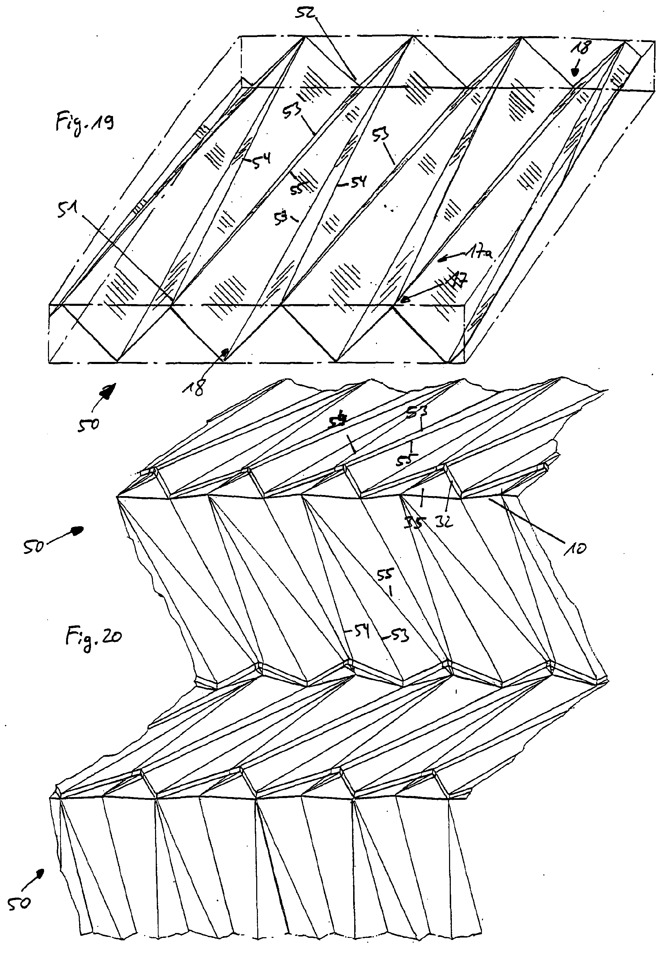

Gemäß Figur 14 verlaufen die stirnseitigen Abflachungen 50 der Filtertaschen, die durch benachbarte Filterwände gebildet werden, zur Längsrichtung des Filters hin geneigt, so dass auch bei schräger Anströmung des Filters durch das fluide Medium (siehe gebogene Pfeile) günstige Strömungsverhältnisse vorliegen. Im Bereich der Abflachungen 50, bei denen die benachbarten Filterwände der Lagendoppelung flächig aneinander anliegen, können im Wesentlichen eindimensionale Versteifungselemente 51 durch die Lagen durchtretend durchgeführt sein. Da die Abflachungen außerhalb der Filtertaschen 52 angeordnet sind und Filterwände eng aneinander anliegen, ist eine partikeldichte Ausgestaltung möglich.

Es versteht sich, dass die Versteifungselemente gemäß Figur 13, 16 nicht auf wellenförmig oder zickzackförmig strukturierte Bänder oder Blechlagen beschränkt beispielsweise in Form von Streckmetalllagen oder andere geeignete Weise ausgeführt sein können. Dies gilt für sämtliche erfindungsgemäße Ausführungen, bei welchen spaltförmige Filtertaschen vorgesehen sind.

Gemäß Figur 15 können die Filterwände 2 geringfügig geneigt zur Längsrichtung des Filters bzw. Durchströmungsrichtung des fluiden Mediums (siehe Pfeil D) verlaufen, wobei die Weite der Filtertaschen 47 in Stapelungsrichtung S, die der Ablagerichtung des mäanderförmig abgelegten Bandes entspricht, einströmseitig und ausströmseitig gleich oder verschieden sein kann. Durch die geneigte Anordnung der Filterwände (Figur 15, oben) kann das einströmseitige Filtervolumen des Partikelfilters, welches durch die einströmseitig offenen Filtertaschen 47 definiert wird, größer sein als das ausströmseitige Volumen der Filtertaschen 48, beispielsweise in einem Verhältnis von 60:40 bis 100:50 oder darüber hinaus. Hierdurch können günstige Strömungs- oder Druckverhältnisse in dem Filter realisiert werden.

In den Figuren 19 und 20 ist eine weitere Ausgestaltung des Bandes mit in Durchströmungsrichtung verlaufenden Rippen dargestellt, die zickzackförmig gefaltet aber auch bogenförmig gewellt sein können. Die Strukturierung ist in Form einer einzelnen Blechlage gemäß Figur 19 und in Form eines mäanderförmig abgelegten Bandes mit Stufen 32 auf Höhe der Umlenkbereiche 10 und Einbuchtungen 35 ausgebildet, wie sie den Stufen 32 des Ausführungsbeispiels nach Figur 9 entsprechen.

Gemäß den Figuren 19 und 20 erfolgt die Strukturierung des Bandes derart, dass auf Höhe einer Stirnseite bzw. Seitenwand des Partikelfilters, beispielsweise der Einströmseite 50a vorgesehen Wellenberge 51 entlang der Durchströmungsrichtung bzw. Filterlängsrichtung in Wellentäler 52 übergehen, so dass der Wellenberg bzw. dessen durch die Faltungslinie gebildete Wellenrücken 17a zur Ausströmseite 50b hin abfällt. Hierzu ist eine erste Gruppe von Faltungslinien 53 erzeugt, die parallel zur Filterlängsrichtung oder zur Durchströmungsrichtung des fluiden Mediums verläuft, wobei auf beiden Seiten der Linie 53 einander gegenüberliegende zweite und dritte Gruppen von Faltungslinien 54 und 55 vorgesehen sind, die jeweils aufeinander zulaufen und jeweils zwischen zwei Linien 53 angeordnet sind und zumindest in etwa auf Höhe der Filterstirnseiten die Linie 53 schneiden. Durch die Gruppen von Faltungslinien 54, 55 werden somit einströmseitig angeordnete Wellenberge mit ausströmseitig angeordneten Wellenbergen verbunden. Hierdurch werden Strömungsumlenkmittel für das fluide Medium bereitgestellt, die eine Strömungskomponente in Querrichtung zur Partikelfilterlängsrichtung erzeugen, wobei die spaltförmigen Filtertaschen über die Breite des Filters ein im wesentlichen gleichbleibende bzw. einen gleichbleibenden Filterwandabstand aufweisen können, wozu die einzelnen Lagen der Filterwände kongruent zueinander ausgebildet sind, aber auch eine inverse Anordnung möglich ist.

Figur 21 zeigt verschiedene Ausführungen von Versteifungselementen, die hier eindimensional oder nulldimensional (Figur 21b) ausgeführt sind. Die Versteifungselemente können insbesondere in Form von Drähten, Bändern aber auch Blechlagenstreifen oder streifenförmigen Streckmetalllagen ausgeführt sein, ohne hierauf beschränkt zu sein.

Gemäß Figur 21a durchstoßen im wesentlichen parallel zu den Filterwandhauptebenen verlaufende Versteifungselemente 60a die Faltungswände auf Höhe von Lagendoppelungen, die von den durch eine Stufe 62 abgesetzten Filtertaschen beabstandet sind und so eine partikeldichte Ausführungsform schaffen, sowie im wesentlichen senkrecht zu den Filterwandhauptebenen verlaufende Versteifungselemente 60b, wobei der Filter auch jeweils nur mit einem Typ von Versteifungselementen, zumindest an der jeweiligen Stirnseite, ausgestatte sein kann. Gegebenenfalls können die Versteifungselemente 60a auch auf den wellenförmigen Abflachungen 62 aufliegen. Die Versteifungselemente können jeweils lose durch die Filterwände durchgezogen sein, beschichtet sein oder mit diesen zugkraftaufnehmend verbunden sein, beispielsweise durch nachträgliche Verdrillung, durch Punktschweißverbindungen, durch kraftschlüssige Verbindungen wie Falzverbindungen oder dergleichen.

Gemäß Figur 21b sind im Bereich der Lagendoppelungen aus Filterwänden 63a, 63b, die eng, vorzugsweise partikeldicht, aneinander anliegen, bzw. an den Einbuchtungen 35 Laschen 65 ausgeklinkt, die in Bereichen der gegenüberliegenden Filterwände eingeklemmt sind oder diese unterstützen, nach dem Ausführungsbeispiel in den Unterseiten der Wellenberge. Durch die Aneinanderreihung der nulldimensionalen Versteifungselemente in Form der ausgeklinkten Laschen 65 werden insgesamt eindimensionale Versteifungsstrukturen ausgebildet. Auch hier sind die Ausklinkungen von den Filtertaschen 63 beabstandet.

Figur 21e zeigt eindimensionale Versteifungselemente in Form von Bändern 66, die durch Punktschweißverbindungen 67 mit den Filterwänden verbunden sind. Die Streifen liegen hierbei auf den Abflachungen 68 auf und können die jeweils darüber liegende Filterwand der benachbarten Lagendoppelung unmittelbar unterseitig abstützen.

Figur 21f zeigt eine Anordnung mit einem eindimensionalen Versteifungselement, hier in Form eines Bandes 69, welches bereichsweise mit isolierenden Stellen 69a versehen ist, beispielsweise durch keramische Beschichtungen. Wie symbolisiert, können diese Bänder als Heizelemente ausgebildet sein.

Die Versteifungselemente 60a,b, 65, 66, 69 sind jeweils vorzugsweise im Bereich der Stirnseiten angeordnet. Die Versteifungselemente können jeweils mit katalytischem Material beschichtet sein, insbesondere wenn diese separate Versteifungselemente darstellen, die Versteifungselemente können auch als Heizeinrichtungen ausgeführt sein, insbesondere wenn diese elektrisch isolierend ausgeführt sind, beispielsweise durch Beschichtung, Oxidation oder dergleichen.

Figur 22a zeigt eine Ausbildung der Filterwände 70 mit gegenüber der Haupterstreckungsrichtung derselben abgebogenen Seitenbereichen 71, die ebenfalls durch durchgehende, stirnseitig angeordnete Umlenkbereiche 72 miteinander verbunden sind und eine Lagendoppelung 71a, 71b unter enger und partikeldichter Anlage der Lagenbereiche 71a und 71b ausbilden. Hierdurch sind partikeldichte Seitenwände des Filters erzeugbar, die sich über die gesamte Länge und/oder Höhe des Filters erstrecken können aber auch gegebenenfalls nur über jeweils einen Teil derselben, um beispielsweise Versteifungselemente auszubilden. Diese Ausgestaltung ist nicht auf die dargestellte inverse Anordnung der Filterwände und gezeigte Ausbildung der Einbuchtung beschränkt, die eine Bandfaltung nach Fig. 8 entspricht, sondern unabhängig von dieser.

Gemäß Figur 22a, oben, kann die Umlenkung der Seitenbereiche 71 im Wesentlichen im Bereiche der Wellentäler 73 erfolgen, nach dem Ausschnitt gemäß Figur 22b, unten, auch auf Höhe der Wellenberge 74 bzw. allgemein dem oberen Scheitel der rippenartigen Bandstrukturierung. Es versteht sich, dass die Wellung jeweils auch bogenförmig ausgeführt sein kann und die stegförmigen Bereiche 75 an den Umlenkbereichen fehlen oder einströmseitig und ausströmseitig unterschiedliche Höhe aufweisen können. Die eindimensionalen Versteifungselemente 76, hier in Form von Drähten, sind ebenfalls abgebogen. Die Versteifungselemente können an den Seitenwänden 71 zugkraftaufnehmend befestigt sein, beispielsweise durch Einklemmung an den Klemmstellen 77, oder an einem Gehäuse zugkraftaufnehmend festgelegt sein. Die Versteifungselemente 76, 66 können auch mit katalytisch wirksamen Material versehen sein.

Nach Figur 22b können die abgebogenen Seitenbereiche auch Ausklinkungen 80 aufweisen, wobei an jeweils einer Lagendoppelung 78a, b nur jeweils vorzugsweise die obere Lage 78a ausgeklinkt wird, so dass darunter eine durchgehende und partikeldichte Seitenwand verbleibt. Die Ausklinkungen können der Befestigung des Filters an einem Gehäuse dienen. Es versteht sich, dass die Ausbildung der ausgeklinkten Seitenwände nicht auf die dargestellte Profilierung des Bandes nach Figur 22b beschränkt ist.

Figur 23a, 23b zeigt eine Umlenkung des Bandes durch Knickstelle 90, die ausgehend von einem Wellenberg 17 durch sich einströmseitig und ausströmseitig erstreckende und auseinanderlaufende Knicklinienpaare 92, 93 erzeugt werden, die sich vorzugsweise auf Höhe der Wellentäler 18 schneiden. Hierdurch werden rautenförmige Bereiche 95 ausgebildet. Insgesamt kann hierdurch der Filter (siehe Figur 23b) Bereiche 8a, 8b aufweisen, deren Durchströmungsrichtungen einen Winkel zueinander einschließen, wodurch einen Höhenversatz HV in Durchströmungsrichtung erzeugt wird. Der gesamte Filter wird hierbei nach wie vor durch ein einziges durchgehendes Band 7 gebildet. Das Gehäuse 11 kann hierbei in Art eines Krümmers ausgebildet sein. Es versteht sich, dass diese Strömungsumlenkung auch bei anderen Profilierungen des Filterbandes möglich ist.

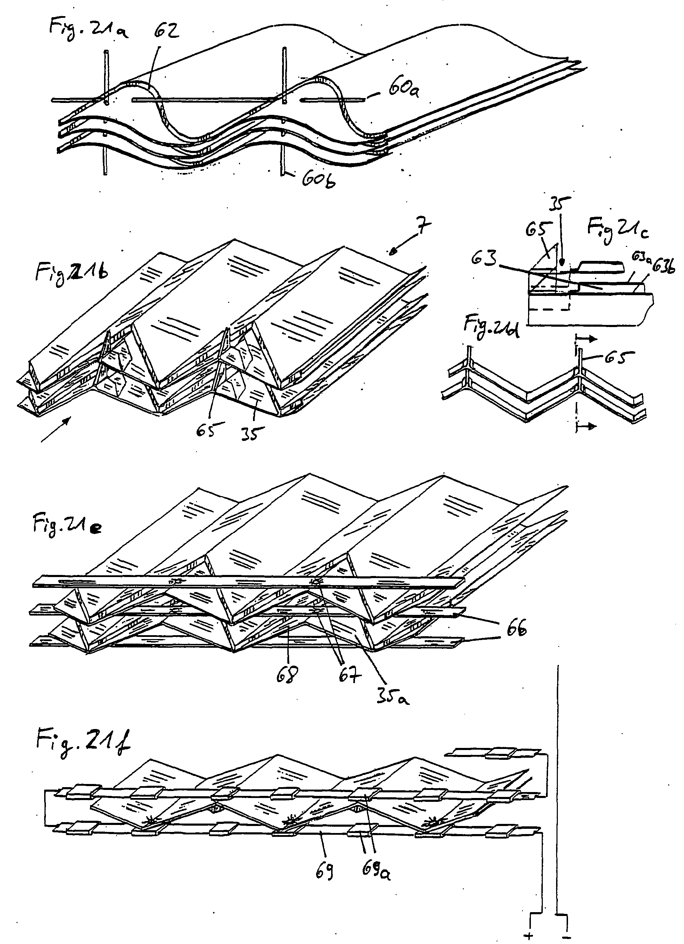

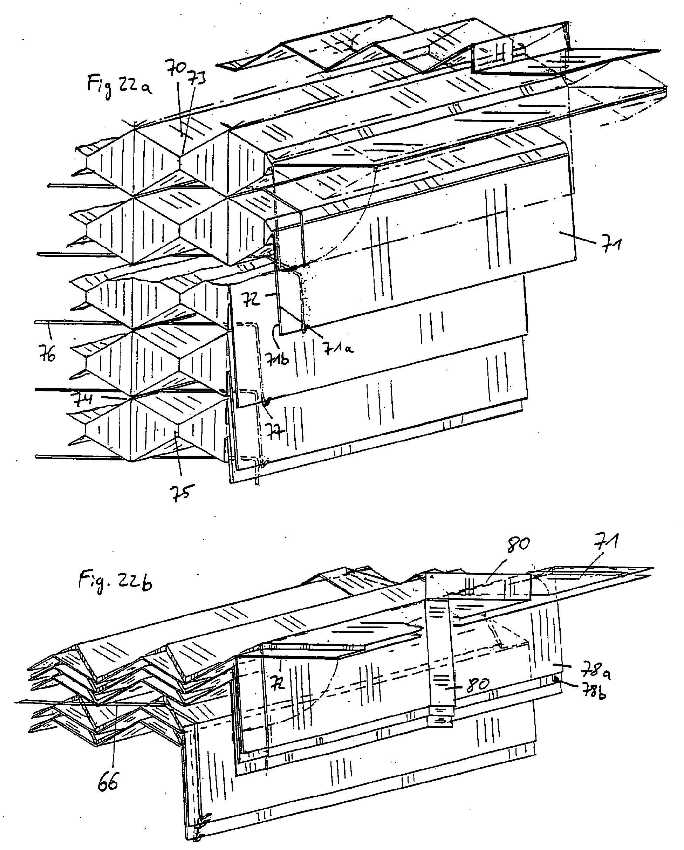

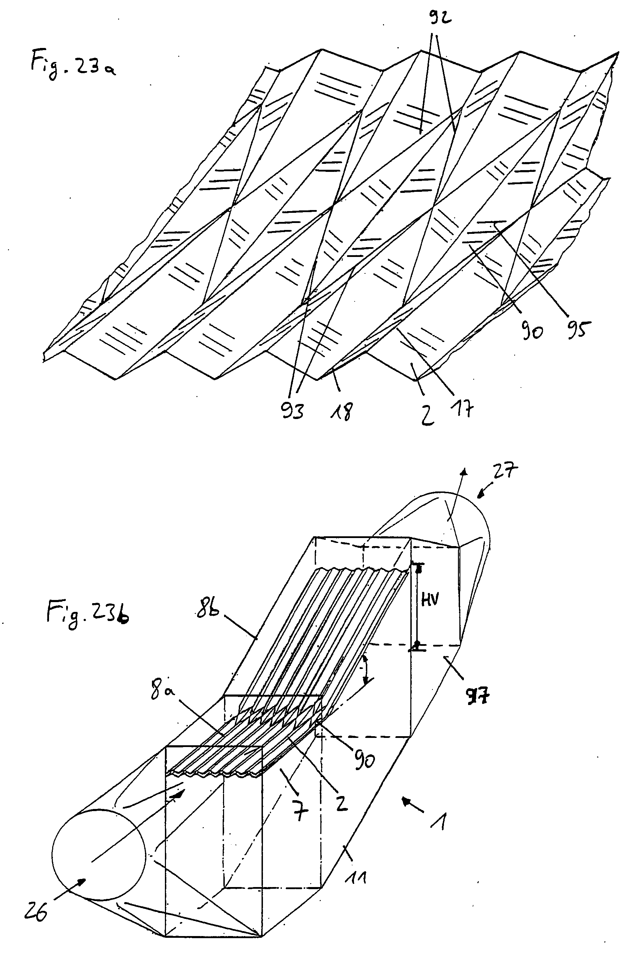

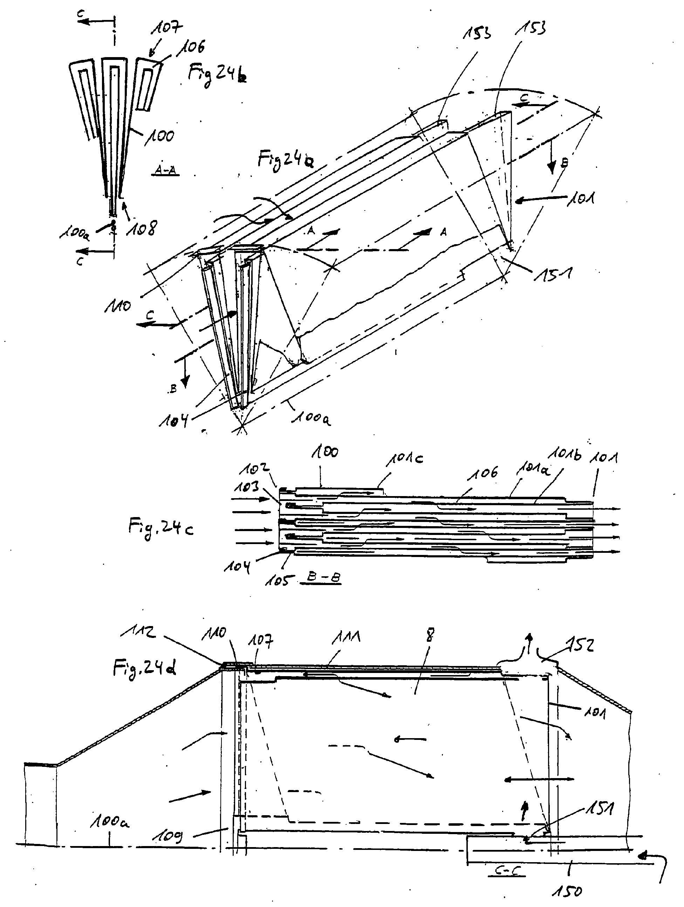

Figur 24 zeigt eine weitere Variante eines Partikelfilters, bei welchem ein Filtermaterialband 100 entlang einer parallel zur Bandlängsrichtung verlaufenden Faltungslinie 101 unter Ausbildung einer Lagendoppelung bezogen auf die Faltungslinie gefaltet ist, die einen stirnseitig, d.h. einström- oder - nach dem Ausführungsbeispiel - ausströmseitig angeordneten, Umlenkbereich bildet. Schnitte der Anordnung nach Fig. 24a entlang den Linien A-A, B-B und C-C sind in den Figuren 24b-d, nach Fig. 24d mit zusätzlichem Gehäuse, dargestellt. Die freien Seitenkanten des Filterbandes sind jeweils mit Seitenkanten einer benachbarten Lagendoppelung unter Ausbildung von Falzen 104, gegebenenfalls auch durch Schweißverbindungen, erzeugt, die die Filtertaschen partikeldicht abschließen. Die einströmseitig, gegebenenfalls anstelle hiervon auch ausströmseitig, aufeinander folgende Verbindungsbereiche 102, 103 der Randbereichen von Filterwänden benachbarter Ladendoppelungen können hierbei, wie dargestellt, gegeneinander vor- und zurückspringend angeordnet. Die Filterwände 101a und 101b werden somit, entsprechend der Terminologie der Erfindung, derselben Lagendoppelung zugeordnet, die Filterwände 101b und 101c verschiedenen Lagendoppelungen. Den Falzungen nachgelagert sind flächige Anlagebereiche 105 benachbarter Filterwände zur Erhöhung der Partikeldichtigkeit. Die Strömungsrichtung des fluiden Mediums durch die durch die Lagedoppelung ausgebildeten Filtertaschen 106 ist durch die gebogenen Pfeile symbolisiert.

Das derart lagengedoppelte Filtermaterialband wird mäanderförmig gemäß Figur 24a,b unter Erzeugung eines zylinderförmigen oder teilzylinderförmigen Partikelabschnittes abgelegt, in dem radial außenseitig Umlenkbereiche 107 größerer Breite und innenseitig an einer zentralen Achse enge Umlenkbereiche 108 vorgesehen sind. Das mäanderförmig abgelegte Band wird somit um die Filterlängsachse 100a zusammengerollt. Wie in Figur 24d dargestellt, kann das fluide Medium nicht durch die Stirnseite 109 sondern auch von radial außen über den dem Umlenkbereich 107 zugeordneten Bereich der Filtertasche in die Filtertaschen eindringen und ausströmseitig durch die Filtertaschen stirnseitig austreten. Der Partikelfilter kann so einteilig als vollzylindrischer Filter ausgeführt sein. Gegebenenfalls können die Umlenkbereiche 101 auch einströmseitig angeordnet sein. An den radial außenliegenden Umlenkbereichen 107 sind stirnseitig oder auch radial vorstehende Laschen 110 ausgebildet, mittels derer der Filter an dem Gehäuse 111 partikeldicht befestigbar ist, beispielsweise in einer Gehäusetasche 112 einklemmbar ist.

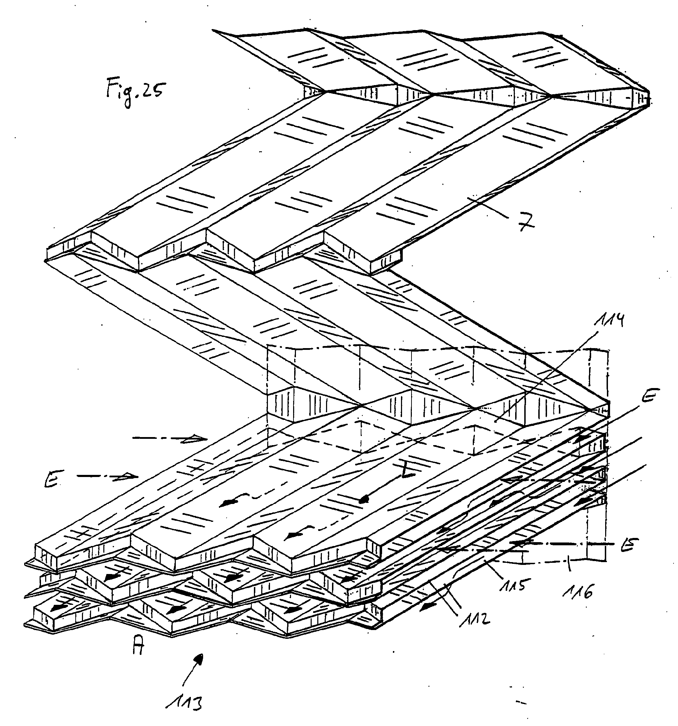

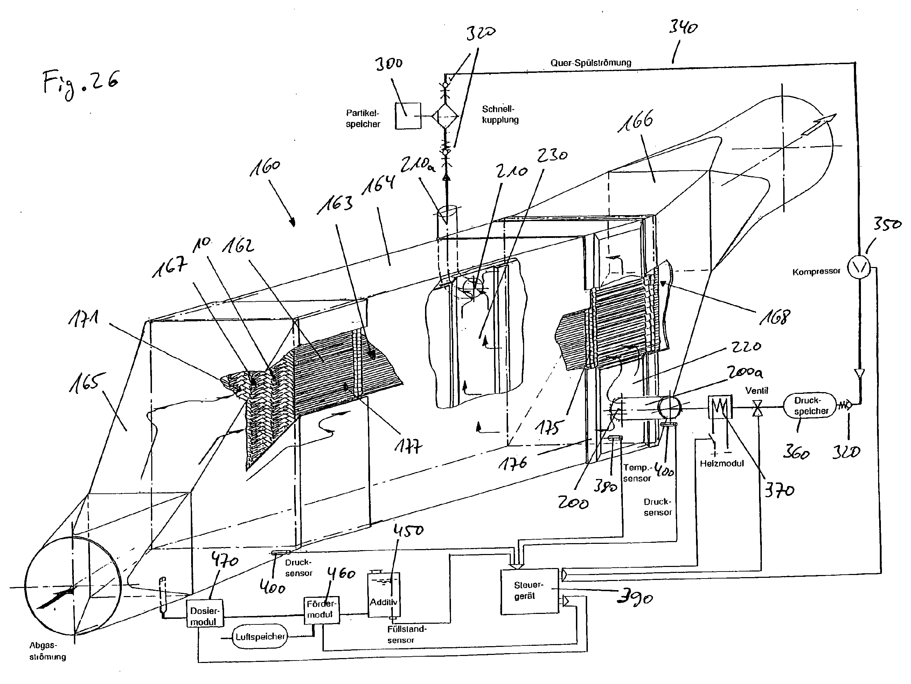

Im Bereich der Achse 100a ist hier eine Spülfluidzuleitung 150 mit einem Spülfluideinlass 151 vorgesehen, wozu die Filterwände entpsrechende Ausnehmungen aufweisen. Durch gegenüberliegende Spülfluidauslässe 153 in den Filtertaschen kann das partikelbeladene Spülfluid einem Sammler 152 zugeführt werden. Der Aufbau der Regenerationseinrichtung im übrigen ist entsprechend dem gemäß Figur 26. Die Ausführungen zu diesem Ausführungsbeispiel gelten entsprechend.

Gemäß Figur 25 kann der Partikelfilter aus einem mäanderförmig abgelegten Band 7 entsprechend Figur 9 ausgebildet sein, wobei Einströmrichtung E und Ausströmrichtung A einen Winkel zueinander einschließen können, beispielsweise von ca. 90°, und/oder wobei mehrere einen Winkel zueinander einschließende Einströmseiten vorgesehen sein können. Die Einströmung kann hierbei quer zur Bandlängsrichtung L in die spaltenförmigen Taschen 115 erfolgen, beispielsweise von gegenüberliegenden Bereichen her. Eine oder beide laterale Einströmseiten E können gegebenenfalls auch geschlossen sein. Hierzu können die seitlichen Bereiche 112 des Bandes miteinander partikeldicht verbunden, beispielsweise umgefalzt oder umgekrempt sein. Die der Ausströmseite 113 gegenüberliegende Seite des Filters kann offen unter Ausbildung von Strömungskanälen 114, die eindimensionalen oder spaltenförmig ausgeführt sein können, ausgeführt sein, sie kann auch, wie dargestellt, durch ein Blech 116 oder dergleichen verschlossen fluiddicht sein. Derartige Filter sind insbesondere als Krümmer einsetzbar.

Figur 26 zeigt einen erfindungsgemäßen Partikelfilter 160 mit Regenerationssystem. Die Filterwände 162 bilden hierbei einen Filterkörper 163, welcher mit einem Einlassstutzen 165 und Auslassstutzen 166 versehenen Gehäuse 164 angeordnet ist, wodurch Einströmseite 167 und Ausströmseite 168 des Filters definiert werden.

Die Filterwände 162 sind aus einem profilierten, durchgehenden und mäanderförmig abgelegten Band erzeugt. Die Umlenkbereiche 10 sind einströmseitig und ausströmseitig angeordnet. Die Strukturierung der Filterwände und Aufbau des Filterkörpers entspricht beispielhaft dem der Figur 9, ohne hierauf beschränkt zu sein. Zwischen den Filterwänden werden sich über die gesamte Längserstreckung und Quererstreckung des Filterkörpers durchgehende spaltförmige Filtertaschen 171 gleichbleibender Spalthöhe ausgebildet, die wechselweise zur Einströmseite 7 oder zur Ausströmseite 8 hin offen sind. Die Durchströmungsrichtung des zu reinigenden Fluids entspricht hierbei der Längsrichtung des mäanderförmig abgelegten Filterbandes, sie kann jedoch auch von dieser verschieden sein, beispielsweise quer oder senkrecht zu dieser. Laschenförmigen Ausklinkungen 175, welche an dem Gehäuse an Befestigungsbereichen 176 lastabtragend festgelegt sind stabilisieren den Filterkörper seitlich. Um das Einströmen des zu reinigenden Fluids in den Filterkörper zu erleichtern und Druckverluste zu vermeiden ist der Filterkörper im Einströmbereich mit seitlich offenen Wandbereichen 177 versehen, die unmittelbar an die Einströmseite 167 angrenzen oder gegebenenfalls auch axial beabstandet sein können.

Zur Regeneration des erfindungsgemäßen Partikelfilters sind an den Seitenflächen, die jeweils zwischen Einström- und Ausströmseite des Filters angeordnet sind, eine Spülfluideintrittsöffnung 200 und eine Spülfluidaustrittsöffnung 210 vorgesehen, die, gegebenenfalls unter Anordnung von Strömungsumlenkmitteln, derart angeordnet sind, dass die Filtertaschen über die gesamte Filterhöhe hin möglichst gleichmäßig mit Spülfluid beaufschlagt werden. Das Spülfluid wird hierzu über die Zuleitung 200a zum Filterkörper zugeführt und über die Ableitung 210a abgeführt. Ferner sind gemäß dem Ausführungsbeispiel Spülfluidzuleitung 200a und Ableitung 210a in der Höhe versetzt zueinander angeordnet, wobei ferner dem Spülfluideinlass ein Prallblech oder eine andersartige Strömungsumlenkung vorgelagert sein kann. Des Weiteren sind an Spülfluideinlass und -auslass 200, 210 Verteiler 220, 230 vorgesehen, die den Fluidstrom über die gesamte Höhe des Filters verteilen. Die Begriffe "Höhe" und "Breite" des Filters beziehen sich hier auf die Darstellung der Figuren.

Durch das querströmende Spülfluid können in den Filtertaschen abgelagerte Partikel besonders einfach durch den Spülfluidauslass entfernt und so der Filter regeneriert werden. Der Spülfluidstrom wird jeweils den einzelnen Filtertaschen zugeführt. Spülfluidstromeinlass und -auslass sind an dem ausströmseitigen Ende des Filters angeordnet, sie können gegebenenfalls auch in Filterlängsrichtung bzw. Durchströmungsrichtung versetzt angeordnet sein. Der Spülfluidstrom wird hierbei jeder der einzelnen einströmseitig offenen Filtertaschen zugeführt und zwar jeweils vorzugsweise auf Höhe der spaltförmigen und seitlich offenen Bereiche derselben, wobei sich die Spalte über die gesamte Breite des Filterkörpers bzw. den gesamten Strömungspfad des Spülfluids durch den Filterkörper erstrecken. Die Spalthöhe wird hierbei entlang des Spülfluidströmungspfades um vorzugsweise nicht mehr als 50% der maximalen oder mittleren Spalthöhe eingeengt und bleibt nach dem Ausführungsbeispiel im Wesentlichen konstant. Der Spülfluideinlass und unabhängig hiervon nach dem Ausführungsbeispiel auch der Spülfluidauslass sind an dem ausströmseitigen Bereich des Filters angeordnet.. Allgemein können Spülfluideinlass und -auslass bzw. die Spülfluidströmungskanäle an den Bereichen des Filterkörpers angeordnet sein, an denen mit verstärkten Partikelablagerungen zu rechnen ist.

Die Regeneration des Filters wird ferner dadurch erleichtert, dass die einströmseitig offenen Kanäle oder Filtertaschen zur Durchleitung von zu reinigendem Fluid im Bereich des Strömungspfades des Spülfluids bzw. des Spülfluideinlasses und/oder -auslasses 200, 210 eine Spalthöhe aufweisen, die ≥ 25% (oder ≥ 50% oder 75%) und nach dem Ausführungsbeispiel ca. 100% der mittleren oder auch maximalen Strömungskanalhöhe für das zu reinigende Fluid in Durchströmungsrichtung beträgt. Die Filterwände sind somit im Bereich der Spülfluidströmungspfade ausreichend durch Umlenkbereiche des mäanderförmigen Bandes oder Querprofilierungen desselben beabstandet. Spitz zusammenlaufende Filterwände im Bereich des ausströmseitigen Filterkörperendes, die zu engen Spalten und damit hohen Druckverlusten bei einer Querströmung eines Spülfluids führen würden, werden vermieden.

Da das Spülfluid nur den einlassseitig offenen Filtertaschen zuzuführen ist, in welchen sich Partikel angesammelt haben, sind die auslassseitig offenen Filtertaschen von dem Spülfluidkanal mehr oder weniger vollständig abgetrennt. Hierzu sind die Randbereiche 25 des Filtermaterialbandes abgefaltet und umgebördelt, um partikeldichte Seitenwände der ausströmseitig offenen Filtertaschen zu bilden. Es versteht sich, dass gegebenenfalls auch eine nur teilweise Entkoppelung ausreichend sein kann. Ferner können Strömungsumlenkbleche jeweils seitlich an dem Filter angeordnet sein. Im Bereich von Spülfluideinlass und -auslass 200, 210 sind an dem Filterkörper Versteifungselemente angebracht, hier in Form von einstückig an den Filterwänden angeformten, seitlich abgewinkelten Laschen. Die Laschen sind an dem Gehäuse an den Befestigungsbereichen 176 kraftaufnehmend festgelegt.

Das Regenerationssystem umfasst des Weiteren einen Partikelspeicher 300, der fluidführend mit dem Spülfluidauslass 210 verbunden werden kann, um von dem Spülfluid vom Filter ausgespülte Partikel zu speichern. Das Speichervermögen des Partikelspeichers ist hierbei ein Vielfaches höher als das des Filters. Der Partikelspeicher kann ein kostengünstiges Speichermedium wie ein Vlies oder Filz aufweisen, welches ein Einwegmaterial sein kann, um die Partikel zurückzuhalten. Die Partikel können in dem Partikelspeicher von dem Fluid abgetrennt werden, gegebenenfalls auch in einer separaten vorgeschalteten Trenneinrichtung. Der Partikelspeicher kann durch Ventile, durch eine Schnellkupplung 320 oder dergleichen im Bedarfsfall fluidführend mit dem Spülfluidauslass verbunden oder an dem Regenerationssystem angekoppelt werden. Der Partikelspeicher kann an der jeweiligen Maschine, Kraftfahrzeug oder dergleichen dauerhaft montiert sein oder gegebenenfalls Teil einer separaten und Maschinen-unabhängigen Regenerationseinrichtung beispielsweise einer Werkstatt sein.

Der Spülfluidstrom wird mittels der Rückführleitung 340 im Kreislauf geführt, das System kann jedoch auch offen ausgeführt sein, so dass gereinigtes Spülfluid in die Umgebung abgelassen wird. Das Regenerationssystem weist des Weiteren eine Spülfluiddruckbeaufschlagungseinrichtung auf, die hier aus einem Kompressor 350 und einem Druckspeicher 360 besteht. Kompressor und gegebenenfalls auch der Druckspeicher können hier ebenfalls an der jeweiligen Maschine dauerhaft vorgesehen oder gegebenenfalls Teil eines Maschinen-unabhängigen Systems sein. Die Spülfluiddruckbeaufschlagungseinrichtung bzw. der Druckspeicher können zum Filter bzw. zum Partikelspeicher hin durch Ventil abgetrennt sein.

Ferner ist eine Heizeinrichtung 370 vorgesehen, so dass aufgeheiztes Spülfluid dem Filter zur Regeneration zugeführt werden kann. Die abgeschiedenen Partikel können hierdurch in dem Filter zumindest teilweise oder vollständig thermisch versetzt oder verascht werden, um die Abfallmenge zu reduzieren. Es versteht sich, dass eine zusätzliche Heizeinrichtung vorgesehen sein kann, die unmittelbar die Filterwände, einen benachbarten Gehäusebereich oder dergleichen erwärmt, um die thermische Zersetzung bzw. Veraschung zu unterstützen, nach dem Ausführungsbeispiel wird jedoch mehr als die Hälfte oder die gesamte zur thermischen Regeneration des Filters notwendigen Wärme durch die Spülfluidheizung 370 bereitgestellt.

Da die thermische Zersetzung bzw. Veraschung der Partikel in dem Filter exotherm verläuft, ist ein Temperatursensor 380 vorgesehen, welcher über die Steuerung 390 mit der Heizeinrichtung 370 gekoppelt ist, so dass beispielsweise bei Selbstentzündung der Partikel die Leistung der Heizung 370 zurückgefahren werden kann. Ferner werden das Ventil sowie der Kompressor durch die Steuerung 390 betätigt.

Des Weiteren sind Drucksensoren 400 vorgesehen, die hier einströmseitig und ausströmseitig angeordnet sind, um Druckverluste über den Filter zu bestimmen und hierdurch den Bedarf einer Regeneration und/oder eine ausreichende Regeneration des Filters anzuzeigen. Der hierfür notwendige Fluidstrom kann ein gegebenenfalls partikelbeladener Abgasstrom der Maschine sein, ein Spülfluidteilstrom oder ein anderer geeigneter Fluidstrom.

Ferner kann das Regenerationssystem eine Einrichtung zur Dosierung eines Additivs aus einem Additiv-Vorratsbehälter 450 aufweisen, welcher mittels einer Fördereinrichtung 460 und einer Dosiereinrichtung 470 dem Strom des zu reinigenden Fluids zugeführt wird, um beispielsweise die thermische Regeneration des Filters zu fördern. Die einzelnen Komponenten der Additiv-Zuführeinrichtung können ebenfalls über das Steuergerät 390 gesteuert werden.

Ein besonderer Vorteil des erfindungsgemäßen Filtersystems liegt darin, dass eine Regeneration gegebenenfalls auch bei währendem Betrieb der jeweiligen Maschine durchgeführt werden kann, die Regeneration des Filters jedoch auch in bestimmten Intervallen erfolgen, beispielsweise aufgrund eines durch die Drucksensoren 400 festgestellten Druckverlustes in Durchströmungsrichtung.

Das Spülfluid kann Luft, Abgase der jeweiligen Einrichtung oder Maschine oder ein anderes geeignetes Fluid sein.

## Patentansprüche

1. Partikelfilter, insbesondere für Abgase von Dieselbrennkraftmaschinen, mit einer Vielzahl von zu durchströmenden Filterwänden (2) mit Filterflächen aus einem Filtermaterial, die für ein Fluid permeabel und für von diesem mitgeführte und zu separierende Partikel im Wesentlichen unpermeabel sind, wobei der Filter eine Einströmseite (3, 26) und eine Ausströmseite (4, 27) aufweist und der Filter in einer Durchströmungsrichtung von dem Fluid durchströmbar ist, wobei die Filterwände (2) aus einem durch Deformation strukturierbaren Flächengebilde bestehen und an der Einströmseite (3, 26) und Ausströmseite (4, 27) des Filters zumindest im wesentlichen partikeldicht miteinander verbunden sind, **dadurch gekennzeichnet, dass** die Vielzahl von Filterwänden (2) des Filters (8) oder eines eine Vielzahl von Filterwänden (2) aufweisenden Filtersegmentes (9a,9b) durch ein durchgehendes Band (7) aus Filtermaterial gebildet werden, das unter Ausbildung von Umlenkbereichen (10) zu einem dreidimensionalen Körper abgelegt ist, bei welchem einströmseitig offene Fluidkanäle vorgesehen sind, die sich zumindest über eine Teillänge des Filterkörpers über zumindest ein Viertel oder im Wesentlichen die gesamte Breite oder den gesamten Radius desselben spaltförmig erstrecken.

2. Partikelfilter nach Anspruch 1, **dadurch gekennzeichnet, dass** sich die Spalte mit vorzugsweise im Wesentlichen konstanter Spalthöhe über zumindest im Wesentlichen die gesamte Filterlänge in Durchströmungsrichtung des Fluids erstrecken.

3. Partikelfilter nach Anspruch 1, **dadurch gekennzeichnet, dass** die Spalthöhe in Durchströmungsrichtung auf das Ausströmende hin zunimmt oder abnimmt.

4. Partikelfilter nach einem der Ansprüche 1 bis 3, **dadurch gekennzeichnet, dass** das an zumindest der Einströmseite (3, 26) oder der Ausströmseite (4, 27) des Filters jeweils benachbarte Filterwände (2) durch einen einströmseitig und/oder ausströmseitig angeordneten durchgehenden Umlenkbereich (10) des bandförmigen Filtermaterials verbunden sind.

5. Partikelfilter nach einem der Ansprüche 1 bis 4, **dadurch gekennzeichnet, dass** das durchgehende Band (7) aus Filtermaterial unter Ausbildung eines dreidimensionalen Körpers (8, 9a, 9b) mäanderförmig abgelegt.

6. Partikelfilter nach Anspruch 5, **dadurch gekennzeichnet, dass** das mäanderförmig abgelegte Band (7) aus Filtermaterial entlang zumindest einer im Wesentlichen parallel zur Bandlängsrichtung (L) verlaufenden Faltungslinie (101) zumindest unter Lagendoppelung gefaltet ist und derart mäanderförmig abgelegt ist, dass die Längsrichtung des Bandes quer zur Durchströmungsrichtung des fluiden Mediums verläuft und dass die in Bandlängsrichtung verlaufende Faltungslinie (101) einströmseitig oder ausströmseitig angeordnet ist.

7. Partikelfilter nach einem der Ansprüche 1 bis 6, **dadurch gekennzeichnet, dass** der Faltungslinie (101) gegenüberliegend angeordnete, in Bandlängsrichtung verlaufende Kanten des Bandes, die bezogen auf die Faltungslinie (101) einer Lagendoppelung (101a, 101b) zuzuordnen sind, mit Abschnitten des Bandes, die einer benachbarten Lagendoppelung (101c) zuzuordnen sind, im Wesentlichen partikeldicht verbunden sind.

8. Partikelfilter nach einem der Ansprüche 1 bis 7, **dadurch gekennzeichnet, dass** die Breite des Bandes die Breite des Filters zumindest bereichsweise übersteigt und dass randseitige Bereiche des Bandes an zumindest einem oder beiden seitlichen Bandrändern unter Ausbildung von Verbindungen zwischen verschiedenen Filterwänden (2) oder unter Ausbildung einer sich zumindest teilweise zwischen Einströmseite (3, 26) und Ausströmseite (4, 27) erstreckenden Seitenwand des Filters abgebogen sind.

9. Partikelfilter nach Anspruch 8, **dadurch gekennzeichnet, dass** im Bereich aneinanderliegender Filterwände (63a, 63b) einer Lagendoppelung Ausklinkungen (65) einer Lage des Bandes (7) des Filtermaterials unter Erhalt einer durchgehenden Filterwand vorgesehen sind und dass die Ausklinkungen (65) in Richtung auf eine benachbarte Filterwand aus der Lage des Bandes abgebogen oder sich von dem Filter seitlich nach außen weg erstreckend angeordnet sind.

10. Partikelfilter nach einem der Ansprüche 1 bis 9, **dadurch gekennzeichnet, dass** die Strukturierungen benachbarter Filterwände (2) im Wesentlichen kongruent oder im Wesentlichen invers zueinander sind.

11. Partikelfilter nach einem der Ansprüche 1 bis 10, **dadurch gekennzeichnet, dass** benachbarte Filterwände (2) unter Ausbildung von im Wesentlichen in Durchströmungsrichtung verlaufenden Rippen (17) strukturiert und benachbarte Filterwände (2) mit einem Abstand in einer Stapelungsrichtung aufeinander stapelförmig abgelegt sind und dass unter Verringerung des Filterwandabstandes ausgebildete Abflachungen (35a, 50) vorgesehen sind, die an dem Filter stirnseitig angeordnet sind und die in Form von sich von der zugeordneten Stirnseite in den Filter hinein erstreckenden Einbuchtungen (35) ausgeführt sind.

12. Partikelfilter nach einem der Ansprüche 1 bis 11, **dadurch gekennzeichnet, dass** die Filterwände (2) in Durchströmungsrichtung verlaufende Strukturierungen in Form von Filterwandwellungen unter Ausbildung von Wellenbergen (17) und Wellentälern (18) und sich in Filterlängsrichtung erstreckenden Wellenrücken (17a) aufweisen und dass die Wellenrücken (17a) eines Teils der Wellungen derart zur Durchströmungsrichtung geneigt verlaufen, dass entlang dieser ein an einer Stirnseite (50a) angeordneter Wellenberg (17) in ein an der gegenüberliegenden Stirnseite (50b) angeordnetes Wellental (18) übergeht.

13. Partikelfilter nach einem der Ansprüche 1 bis 12, **dadurch gekennzeichnet, dass** die Umlenkbereiche (10) des Filtermaterialbandes an der Einströmseite (3, 26) und/oder Ausströmseite (4, 27) eine Höhe quer zu der Durchströmungsrichtung des Filters aufweisen, so dass benachbarte Filterwände (2) stirnseitig durch die Umlenkbereiche (10) voneinander beabstandet sind.

14. Partikelfilter nach einem der Ansprüche 1 bis 13, **dadurch gekennzeichnet, dass** der Filter als im Wesentlichen zylindrischer oder teilzylindrischer Filterkörper mit einer Filterkörperlängsachse (100a) ausgebildet ist, der durch ein unter Lagendoppelung in Längsrichtung gefaltetes, mäanderförmig abgelegtes Band (7) aus Filtermaterial hergestellt ist, und dass das mäanderförmig abgelegte Band (7) unter Ausbildung von Umlenkbereichen, die im zylindrischen oder teilzylindrischen Außenumfang angeordnet sind, um die Filterkörperlängsachse (100a) zusammengelegt ist.

15. Partikelfilter nach einem der Ansprüche 1 bis 14, **dadurch gekennzeichnet, dass** langgestreckte Versteifungselemente (45, 60a, 66) vorgesehen sind, die zwischen den Lagen des Filtermaterialbandes angeordnet sind, die Lagen des Bandes durchdringen (60b) und/oder stirnseitig (40) an dem Filter angeordnet sind und/oder dass zumindest ein Versteifungselement (40) vorgesehen ist, welches sich vollumfänglich um den Filter erstreckt und quer zur Erstreckungsrichtung der Filterwände (2) verläuft.

16. Partikelfilter nach einem der Ansprüche 1 bis 15, **dadurch gekennzeichnet, dass** zwischen oder auf den Filterwänden (2) Strukturelemente (14, 36, 45) mit katalytisch wirksamen Material zur katalytischen Umsetzung von zumindest einer Komponente des fluiden Mediums und/oder der Partikel vorgesehen sind.

17. Partikelfilter nach einem der Ansprüche 1 bis 16, **dadurch gekennzeichnet, dass** das Band (7) aus Filtermaterial einseitig oder beidseitig angeformte Streifen (16) aus von dem Filtermaterial verschiedenen Materials aufweist.

18. Partikelfilter nach einem der Ansprüche 1 bis 17, **dadurch gekennzeichnet, dass** das einströmseitige Volumen des Partikelfilters größer/gleich dem 1,5-fachen des ausströmseitigen Filtervolumens beträgt.

19. Partikelfilter nach einem der Ansprüche 1 bis 18, **dadurch gekennzeichnet, dass** einströmseitig zwischen benachbarten Filterwänden (2) ausgebildet Einströmspalte für das Fluid vorgesehen sind und dass sich die Spaltbreite zum Inneren des Partikelfilters hin verringert und die den Spalt begrenzenden Filterwände (2) beabstandet von der einströmseitigen Stirnseite unter Ausbildung von im Wesentlichen eindimensionalen Strömungskanälen stellenweise aneinander anliegend ausgebildet sind.

20. Partikelfilter nach einem der Ansprüche 1 bis 19, **dadurch gekennzeichnet, dass** zumindest eine oder zwei Einströmseiten (E) vorgesehen sind, die bei Einströmung des Fluids in den Partikelfilter aus unterschiedlichen Richtungen unter Eintritt des Fluids in zwischen benachbarten Filterwänden (2) ausgebildete Strömungsumlenkkanäle für das Fluid ermöglichen, und dass zumindest eine Ausströmseite (A) vorgesehen ist, aus welcher das Fluid in einer unterschiedlichen Richtung zu zumindest der einen oder beiden Einströmrichtungen aus dem Partikelfilter austritt.

21. Partikelfilter nach einem der Ansprüche 1 bis 20, **dadurch gekennzeichnet, dass** die Strömungsrichtung des fluiden Mediums auf Höhe der Einströmseite (3, 26) des Partikelfilters quer zur Längsrichtug von Strömungskanälen oder rippenförmigen Strukturierungen geführt ist und beim Austreten aus der Ausströmseite (A) in Längsrichtung der Strömungskanäle oder rippenförmigen Strukturierungen des Partikelfilters geführt ist.

22. Partikelfilter nach einem der Ansprüche 1 bis 21, **dadurch gekennzeichnet, dass** in einer Richtung quer zu der Durchströmungsrichtung des zu reinigenden Fluids durch diesen erstreckende, Strömungskanäle für ein Spülfluid mit einer Spülfluideintrittsöffnung und einer Spülfluidaustrittsöffnung vorgesehen sind, durch die mittels des Spülfluids die von den Filterwänden zurückgehaltenen Partikel durch die Spülfluidströmungskanäle aus dem Filterkörper abführbar sind.

23. Partikelfilter nach Anspruch 22, **dadurch gekennzeichnet, dass** eine oder beide Öffnungen der Spülfluideintrittsöffnung und Spülfluidaustrittsöffnung jeweils auf Seiten des Partikelfilters angeordnet sind, die von der Einströmseite und der Ausströmseite des Filterkörpers für das zu reinigende Fluid verschieden sind oder dass die Spülfluideintrittsöffnung und die Spülfluidaustrittsöffnung oder beide Öffnungen an Seitenflächen des Partikelfilters vorgesehen sind, die beidseitig von den Umlenkbereichen des Filtermaterialbandes begrenzt werden.

24. Partikelfilter Anspruch 22 oder 23, **dadurch gekennzeichnet, dass** Zuleitungen vorgesehen sind, welche das Spülfluid bezogen auf die Durchströmungsrichtung des zu reinigenden Fluids seitlich den spaltförmigen Bereichen der Fluidkanäle zuleiten, oder dass Spülfluidableitungen vorgesehen sind, die das Spülfluid seitlich von den spaltförmigen Kanälen für das zu reinigende Fluid abführen, oder dass beide Arten von Leitungen vorgesehen sind.

25. Partikelfilter nach einem der Ansprüche 22 bis 24, **dadurch gekennzeichnet, dass** ein Partikelspeicher vorgesehen ist, sowie Zuleitungen, um den den Filterkörper verlassenden und mit Partikeln beladenen Spülfluidstrom dem Partikelspeicher zuzuführen, in welchem die im Spülfluidstrom von dem Filterkörper abgeführten Partikel angesammelt werden, oder dass eine Heizeinrichtung zur Erwärmung des der Spülfluideintrittsöffnung zugeführten Spülfluids vorgesehen ist, oder beide Einrichtungen von Partikelspeicher und Heizeinrichtung.
